(19) Europäisches Patentamt / European Patent Office / Office européen des brevets

(11) **EP 3 079 074 A1**

(12) **DEMANDE DE BREVET EUROPEEN**

(43) Date de publication:
**12.10.2016  Bulletin 2016/41**

(21) Numéro de dépôt: **16163473.8**

(22) Date de dépôt: **01.04.2016**

(51) Int Cl.:
*G06F 17/15* (2006.01)  *G10L 19/008* (2013.01)
*H04R 29/00* (2006.01)  *H04S 3/00* (2006.01)
*H04S 5/00* (2006.01)  *H04S 7/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **10.04.2015  FR 1553164**
**28.07.2015  FR 1557214**

(71) Demandeurs:
• **B<>COM**
**35510 Cesson Sevigne (FR)**

• **Orange**
**75015 Paris (FR)**

(72) Inventeurs:
• **FEDOSOV, Andrey**
**35000 Rennes (FR)**
• **DANIEL, Jerome**
**22710 Penvenan (FR)**
• **PALLONE, Gregory**
**35ooo Rennes (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(54) **PROCÉDÉ DE TRAITEMENT DE DONNÉES POUR L'ESTIMATION DE PARAMÈTRES DE MIXAGE DE SIGNAUX AUDIO, PROCÉDÉ DE MIXAGE, DISPOSITIFS, ET PROGRAMMES D'ORDINATEURS ASSOCIÉS**

(57)    L'invention concerne un procédé de traitement de données pour l'estimation de paramètres de mixage d'au moins un signal audio d'appoint capté par un dispositif de prise de son, dit microphone d'appoint, agencé à proximité d'une source parmi une pluralité de sources acoustiques constituant une scène sonore, et un signal audio principal capté par un dispositif de prise de son ambisonique, agencé pour capter ladite pluralité de sources acoustiques de la scène sonore.

Selon l'invention, ledit procédé comprend les étapes suivantes:
- Estimation (E2) d'un retard entre la composante omnidirectionnelle de la trame du signal audio principal et la trame dudit signal d'appoint; et
- Estimation (E3) d'au moins une position angulaire de la source captée par ledit microphone d'appoint dans un référentiel du microphone principal.

FIG. 5

**Description**

**1. Domaine de l'invention**

Le domaine de l'invention est celui des technologies de prise de son et des technologies de traitement audio associées.

L'invention peut notamment, mais non exclusivement, s'appliquer au mixage de signaux acoustiques issus respectivement d'un dispositif de prise de son principal, de type ambisonique et d'au moins un dispositif de prise de son d'appoint, mis en oeuvre pour la captation d'une scène sonore tridimensionnelle.

**2. Présentation de l'art antérieur**

Le terme « mixage » ou simplement « mix » désigne un ensemble d'opérations de traitement de signaux audio, réalisées par un logiciel ou par un appareil, au terme desquelles tous les signaux sont mélangés pour obtenir un son unifié en réglant le niveau sonore, le timbre, la spatialisation et d'autres caractéristiques sonores. En général, ce son est constitué de plusieurs signaux et diffusé sur plusieurs haut-parleurs distribués dans l'espace d'écoute (ou au casque), afin de créer une image de scène sonore où l'on peut percevoir des sources sonores localisées en angle et en profondeur (c'est la « stéréophonie », au sens large). L'étape de « mixage », réalisée par exemple dans un studio d'enregistrement, est une partie intégrante dans la production de la musique, des films, des émissions radio et télévisuelles.

Dans une conception classique de prise de son d'une scène sonore, la captation du son consiste en l'utilisation d'un système microphonique principal qui fournit une image sonore globale de la scène tout en apportant la « couleur» et le « volume » de l'espace. Bien souvent, chaque microphone du système capte un signal qui est ensuite restitué sur un haut-parleur dédié. L'image sonore qui en résulte et sa localisation dépendent des différences d'amplitude et/ou de phase entre les signaux diffusés par les différents haut-parleurs. Pour améliorer la qualité perçue des sources acoustiques importantes, le preneur du son utilise des microphones d'*appoint,* disposés à proximité des sources en question.

La captation du champ sonore la plus généralisée repose sur une prise de son à l'aide de couples microphoniques pour une restitution stéréophonique sur deux haut-parleurs. Les principes d'une telle captation remontent aux années 1930. L'évolution des systèmes de restitution vers un plus grand nombre de haut-parleurs (quadriphonie, multicanal) pour ajouter une dimension immersive, a suscité la création de nouveaux systèmes de prise de son rationnels et capables d'opérer immédiatement avec plusieurs canaux.

On dispose aujourd'hui de systèmes microphoniques composés de plusieurs capsules agencées pour capter la scène sonore dans plusieurs dimensions (typiquement 2 ou 3) selon une technologie dite « ambisonique ». La technologie « ambisonique » est par exemple décrite dans l'article de M. A. Gerzon, intitulé « Periphony: With-Height Sound Reproduction et publié dans la revue J. Audio Eng. Soc., vol. 21, no. 1, pp. 2-10, en Fév. 1973.

L'approche ambisonique consiste à représenter les caractéristiques d'un champ sonore à partir d'harmoniques sphériques au premier ordre en un point qui correspond à la position du microphone, et qui correspondra, lors de la restitution, à la position de l'auditeur. L'ordre 1 de ce format décrit le champ sonore à l'aide de quatre composantes qui contiennent une information spatiale (azimut, élévation) ainsi que des caractéristiques sonores telles que :

- la hauteur, qui fait percevoir un son comme plus ou moins aigu ;
- la durée, le temps de résonance et d'entretien d'un son ;
- l'intensité, le volume, la force d'un son ;
- le timbre, la « couleur » d'un son.

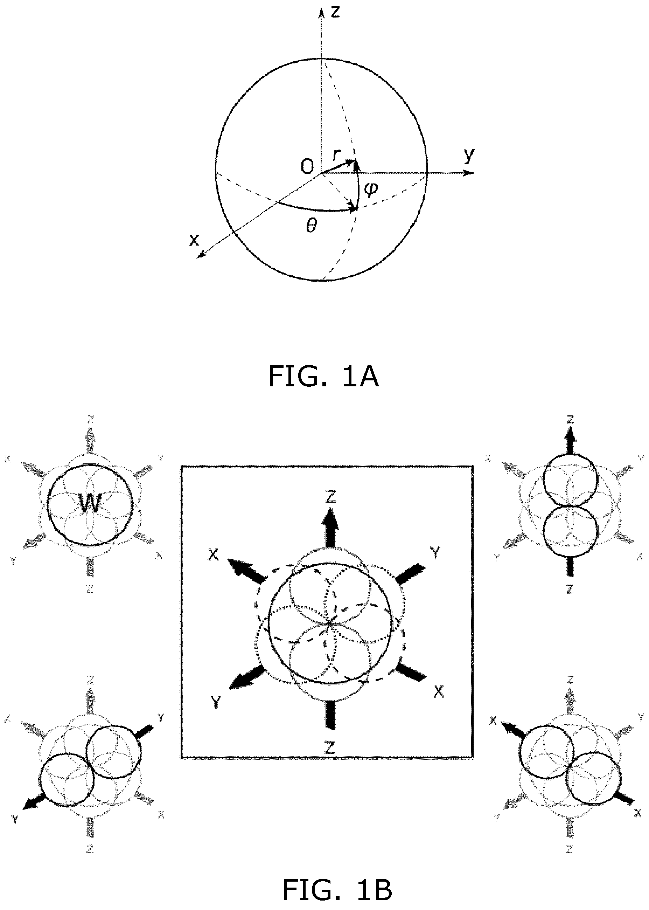

En relation avec la Figure **1A**, on définit chaque point de l'espace Euclidien à trois dimensions avec les 3 paramètres suivants:

- azimut $\theta$
- élévation $\varphi$
- rayon $r$

Les coordonnées cartésiennes d'un point dans l'espace (*x,y,z*) s'expriment à partir de coordonnées sphériques (*r*,$\theta$,$\varphi$) de la manière suivante:

$$\begin{cases} x = r \cdot \cos\theta \cdot \cos\varphi \\ y = r \cdot \sin\theta \cdot \cos\varphi \\ z = r \cdot \sin\varphi \end{cases} \quad (1)$$

En relation avec la Figure **1B**, pour capter le premier ordre HOA, Michael Gerzon a proposé d'utiliser un microphone omnidirectionnel produisant une composante nommée *W*, dite de pression, couplé à trois microphones bidirectionnels, produisant les composantes *X*, *Y*, *Z*, qui sont orientées selon des axes orthogonaux. L'espace sonore 3D est alors capté par la combinaison du microphone « omni » fournissant le signal correspondant à la composante W) et des microphones bidirectionnels fournissant les signaux correspondant aux composantes *X*, *Y*, *Z*. L'ensemble des quatre composantes captées par ce type de dispositif est appelé format B ou autrement dit l'ordre 1 du format HOA pour « Higher Order Ambisonic ». Ce format HOA est vu comme une généralisation de l'ambisonique à des ordres supérieurs permettant d'augmenter la résolution spatiale du champ sonore.

D'autres types de microphones existent, utilisant des directivités de capsules différentes, et pour lesquels un matriçage (de gains ou de filtres) est nécessaire afin d'obtenir les composantes ambisoniques. On notera qu'un minimum de 3 capsules en 2 dimensions, et 4 capsules en 3 dimensions est nécessaire. C'est par exemple le cas du microphone Soundfield® qui utilise 4 capsules cardioïdes quasi-coïncidentes et qui permet de fournir, après matriçage, les 4 signaux du format B, ou encore le cas du microphone Eigenmike® qui possède 32 capsules réparties sur une sphère rigide de 8,4cm de diamètre et qui permet de fournir, après conversion, les 25 signaux du format HOA d'ordre 4.

Les microphones d'appoint sont généralement des capsules monophoniques directives, dirigées vers les sources à capter, mais il est possible d'utiliser un microphone (ou couple) stéréophonique. L'avantage d'un microphone stéréophonique est qu'il permet de capter un espace sonore local, comme par exemple celui formé par différents instruments d'un pupitre d'un orchestre de musique classique tout en conservant leurs positions relatives, ou encore les « overhead » d'une batterie (micros d'ambiance au-dessus de la tête d'un batteur, ce qui permet de capter les positionnements relatifs des toms ou des cymbales).

Dans la suite du document, nous allons nous restreindre, sans perte de généralité, au format B, c'est à dire l'ordre 1 du format HOA et à des microphones d'appoint monophoniques.

On considère une source acoustique s dont la position par rapport à l'origine est décrite par le vecteur unitaire $\vec{u}$ $(u_x, u_y, u_z)$. Ses 4 composantes selon le format B s'expriment sous la forme suivante :

$$\begin{cases} W = s \\ X = \eta \cdot s \cdot u_x \\ Y = \eta \cdot s \cdot u_y \\ Z = \eta \cdot s \cdot u_z \end{cases} \qquad (2)$$

où $\eta$ est un facteur de normalisation introduit par Gerzon pour conserver le niveau d'amplitude de chaque composante.

La technologie ambisonique s'adapte à différents systèmes de restitution, permet de réaliser des manipulations de la scène sonore (rotation, focalisation,...) et repose sur un formalisme mathématique puissant.

L'utilisation combinée de microphones « ambisoniques » à capsules avec des microphones d'appoint ouvre de nouvelles possibilités de prise de son, mais demande la production de nouveaux outils qui permettent de manipuler le champ sonore au format HOA ainsi que d'intégrer dans le mixage toutes les sources acoustiques captées par des microphones d'appoint.

On connait un dispositif logiciel de type « plug-in », commercialisé sous le nom de PanNoir par la société Merging Technologies, capable d'effectuer un positionnement spatial (pour « pan-pot », en anglais) de microphones d'appoint avant de mixer les signaux acoustiques qu'ils ont capté avec ceux d'un microphone principal à deux capsules. L'utilisateur doit fournir manuellement la distance (donc le retard global) et la position relative des microphones d'appoint au microphone principal, ainsi que les caractéristiques de ce dernier (espacement, orientation et directivité des 2 capsules), et le « plug-in » se charge de calculer les retards et gains à appliquer à chaque capsule d'appoint. Dans le cas d'un microphone principal coïncidant, c'est-à-dire à capsules colocalisées et d'un appoint monophonique, le retard n'est pas calculé automatiquement, mais fourni par l'utilisateur.

## 3. Inconvénients de l'art antérieur

L'estimation des paramètres pour le mixage des signaux audio captés pour une même scène sonore par un microphone principal et au moins un microphone d'appoint est en grande partie effectuée manuellement par l'ingénieur du son, ce qui constitue une tâche longue et fastidieuse, qui aboutit à un résultat souvent approximatif.

## 4. Objectifs de l'invention

L'invention vient améliorer la situation.

L'invention a notamment pour objectif de pallier ces inconvénients de l'art antérieur.

Plus précisément, un objectif de l'invention est de proposer une solution qui estime automatiquement les paramètres de mixage des signaux captés par un ou plusieurs microphones d'appoint à un microphone principal de type « ambisonique », de façon fiable.

Un autre objectif de l'invention est de proposer à un ingénieur du son une assistance au mixage de ces signaux à partir des paramètres estimés.

## 5. Exposé de l'invention

Ces objectifs, ainsi que d'autres qui apparaîtront par la suite, sont atteints à l'aide d'un procédé de traitement de données pour l'estimation de paramètres de mixage d'au moins un signal audio d'appoint capté par un dispositif de prise de son, dit microphone d'appoint, agencé à proximité d'une source parmi une pluralité de sources acoustiques constituant une scène sonore, et un signal audio principal capté par un dispositif de prise de son, agencé pour capter ladite pluralité de sources acoustiques de la scène sonore, ledit signal audio principal étant encodé dans un format dit « ambisonique », comprenant au moins une composante ($W$) omnidirectionnelle et trois composantes ($X, Y, Z$) bidirectionnelles projetées selon des axes orthogonaux d'un référentiel du microphone principal, ledit procédé étant caractérisé en ce qu'il comprend les étapes suivantes , mises en oeuvre pour une trame du signal audio principal et une trame d'un dit signal d'appoint, une trame comprenant au moins un bloc de N échantillons:

- Estimation d'un retard entre la composante omnidirectionnelle de la trame du signal audio principal et la trame dudit signal d'appoint, à partir d'au moins un bloc de $N$ échantillons d'une des deux trames, dit bloc de référence, associé à un instant d'acquisition prédéterminé, et d'une zone d'observation de l'autre trame, dite zone d'observation, comprenant au moins un bloc de $N$ échantillons et formée dans un voisinage de l'instant d'acquisition, par maximisation d'une mesure de similarité entre le bloc de référence et un bloc de la zone d'observation, dit bloc d'observation, décalé temporellement du retard par rapport au bloc de référence; et

- Estimation d'au moins une position angulaire de la source captée par ledit microphone d'appoint dans un référentiel du microphone principal par calcul d'un rapport entre un premier produit scalaire d'un bloc du signal audio d'appoint associé à l'instant d'acquisition prédéterminé et d'une première composante du bloc du signal audio principal décalé temporellement du retard estimé et un deuxième produit scalaire du même bloc du signal audio d'appoint et du bloc d'une deuxième composante du signal audio principal décalé temporellement du retard estimé.

On suppose que le microphone d'appoint est placé à proximité d'une source acoustique particulière. Cette source émet un signal acoustique qui est capté par le microphone d'appoint avec un premier retard qui dépend d'une distance entre le microphone d'appoint et cette source. Ce signal est aussi capté par le microphone principal avec un deuxième retard qui dépend de la distance entre la source et le microphone principal.

L'invention propose d'estimer le retard réel entre les deux signaux en recherchant des blocs similaires décalés temporellement. Ce retard correspond à la différence entre le deuxième et le premier retard. Il est lié à la position apparente de la source telle qu'elle est perçue par le microphone principal et donc à la position à laquelle il convient de spatialiser le signal audio d'appoint dans le référentiel du microphone principal.

L'invention s'appuie sur la composante omnidirectionnelle du signal ambisonique qui représente un champ de pression acoustique et ne contient aucune information sur la position de la source acoustique. Du fait de son caractère omnidirectionnel, on est garanti de retrouver dans cette composante des caractéristiques communes avec le signal d'appoint.

La mise en oeuvre du procédé selon l'invention permet d'obtenir une valeur de retard estimée pour un bloc de la trame de référence. Elle est avantageusement répétée pour les autres blocs de cette trame.

Contrairement à l'ingénieur du son, qui mesure généralement une distance entre le microphone principal et le microphone d'appoint, en déduit un retard, qu'il doit ajuster à la main pour compenser le fait que la source n'est pas nécessairement très proche de du micro d'appoint, l'invention permet d'obtenir le retard réel entre les signaux d'appoint et principal.

La détermination de cette valeur de retard est ensuite exploitée pour estimer au moins une position angulaire du signal audio d'appoint dans le référentiel 3D du microphone principal. Cette position angulaire correspond à celle de la source située à proximité du microphone d'appoint dans le référentiel du microphone principal.

Pour ce faire, l'invention calcule des projections du signal d'appoint retardé du retard estimé sur certaines composantes directionnelles du signal principal encodé au format ambisonique et un rapport entre ces projections pour en déduire une estimation d'une position angulaire de la source dans un plan du référentiel du microphone principal à partir duquel on a encodé le signal ambisonique.

En pratique, un bloc de référence peut être avantageusement choisi dans le signal monophonique du microphone d'appoint, et être comparé à différents blocs d'observation de même taille, issus de la zone d'observation située dans le signal ambisonique, à partir d'un instant postérieur à l'instant d'acquisition. Cette approche permet de choisir un bloc de référence dans un signal relativement propre au sens où la source relative sera captée avec un bon rapport signal à bruit. Cela permet également dans certains cas d'identifier un signal caractéristique comme une attaque (ou transitoire) qui sera plus facilement détectable dans le signal ambisonique.

Un bloc de référence peut aussi être avantageusement situé dans le signal ambisonique du microphone principal, et être comparé à des blocs d'observation de la zone d'observation située dans le signal audio du microphone d'appoint. Cette approche permet de minimiser la latence algorithmique du traitement puisqu'en choisissant comme bloc de référence les derniers échantillons de la trame du signal ambisonique, il est possible de fournir une estimation de retard à appliquer directement à ces derniers échantillons. Ceci n'était pas forcément le cas dans l'approche précédente, où le bloc d'observation le plus similaire au bloc de référence n'est pas nécessairement situé à la fin de la nouvelle trame.

Selon un autre aspect de l'invention, le bloc de référence étant choisi dans le signal audio d'appoint, l'étape d'estimation du retard comprend un calcul d'une mesure de similarité au moins pour le bloc de référence, à partir d'une fonction d'intercorrélation normalisée ($C_i$) qui s'exprime de la façon suivante :

$$C_i(\tau) = \frac{\langle a_n | W \rangle_{-\tau}}{\|a_n\| \cdot \|W\|_{-\tau}}$$

avec $W(t)$ composante omnidirectionnelle du signal ambisonique, $a_n(t)$ signal d'appoint, $\langle x|y\rangle_\tau =\ _0\langle x|y\rangle_\tau$ le produit scalaire entre les deux signaux décalés temporellement de $\tau$, de support fini, dans la zone d'observation associée au bloc de référence ($BRef_i$), et $\|x\|_\tau = \sqrt{_\tau\langle x|x\rangle_\tau}$ , la norme d'un signal discret à support fini ; et le retard ($\tau$) est estimé à partir de la valeur maximale de la mesure de similarité calculée :

$$\tilde{\tau} = \underset{\tau}{\text{Argmax}}\, C_i(\tau) = \underset{\tau}{\text{Argmax}}\, \frac{\langle a_n | W \rangle_{-\tau}}{\|a_n\| \cdot \|W\|_{-\tau}}.$$

Un avantage de cette mesure est qu'elle est peu coûteuse comparée à des méthodes statistiques d'ordre supérieur à 1.

Selon un autre aspect de l'invention, l'étape d'estimation du retard comprend en outre un lissage temporel de la mesure de similarité calculée pour le bloc de référence prenant en compte la mesure de similarité calculée pour au moins un bloc de référence précédent.

Un avantage est d'éliminer les pics secondaires liés à une périodicité des signaux et ainsi d'augmenter la robustesse du retard estimé.

Selon un autre aspect de l'invention, l'estimation d'une position angulaire de la source captée comprend l'estimation d'un angle d'azimut à partir d'un rapport entre le produit scalaire du signal du bloc de référence associé à l'instant d'acquisition prédéterminé avec le bloc de la composante $Y$ du signal audio principal décalé du retard estimé et le produit scalaire du signal du bloc de référence associé à l'instant d'acquisition prédéterminé avec le bloc de la composante $X$ du signal audio principal décalé du retard estimé.

L'invention consiste à projeter le signal d'appoint sur les composantes $X$ et $Y$ du principal, ce qui permet de sélectionner dans le signal principal ce qui provient du micro d'appoint.

De façon avantageuse, l'angle d'azimut est estimé à partir de l'équation suivante :

$$\tilde{\theta}_n = \text{atan2}(\langle a_n | Y \rangle_{-\tilde{\tau}}, \langle a_n | X \rangle_{-\tilde{\tau}})$$

Un avantage de la fonction *atan*2 qui est une variation de la fonction Arctangente est qu'elle donne des résultats entre ]-$\pi$, $\pi$].

Selon un autre aspect de l'invention, l'estimation d'une position spatiale comprend l'estimation d'un angle d'élévation à partir d'un rapport entre le produit scalaire du bloc de référence du signal audio d'appoint associé à l'instant d'acquisition avec le bloc de la composante $Z$ du signal audio principal décalé du retard ($\tau$) estimé et le produit scalaire du bloc du signal audio d'appoint associé à l'instant d'acquisition avec le bloc de la composante omnidirectionnelle du signal audio principal décalé du retard ($\tau$) estimé.

L'invention propose de calculer l'angle d'élévation en projetant le signal d'appoint sur les composantes $Z$ et $W$

du principal, ce qui permet de sélectionner dans le signal principal ce qui provient du micro d'appoint.

De façon avantageuse, l'angle d'élévation est estimé à partir de l'équation suivante :

$$\tilde{\varphi}_n = \arcsin\left(\frac{\langle a_n | Z \rangle_{-\tilde{\tau}}}{\eta \cdot \langle a_n | W \rangle_{-\tilde{\tau}}}\right)$$

Selon encore un autre aspect de l'invention, le procédé comprend en outre une estimation d'un paramètre de gain à partir d'un rapport entre le produit scalaire du bloc de référence du signal audio d'appoint et du bloc de la composante omnidirectionnelle du signal audio principal décalé du retard estimé et la norme du bloc du signal audio d'appoint. Pour estimer le niveau de gain entre les deux signaux, on utilise la composante omnidirectionnelle du signal principal, qui ne favorise aucune direction particulière.

De façon avantageuse, le paramètre de gain est estimé à partir de l'équation suivante :

$$\tilde{g}_{m,n,W} = \frac{\langle a_n | W \rangle_{-\tilde{\tau}}}{\|a_n\|^2}$$

Selon un autre aspect de l'invention, le procédé comprend une étape de calcul d'un indice local de confiance associé à un paramètre de mixage estimé pour le bloc de références, par analyse de la fonction d'intercorrélation normalisée calculée entre le bloc du signal audio d'appoint associé à l'instant d'acquisition prédéterminé et le bloc de la composante omnidirectionnelle du signal audio principal décalé du retard estimé et d'une énergie du signal du bloc de référence.

Un avantage de cette solution est notamment qu'elle réutilise les valeurs de la fonction d'intercorrélation calculées pour l'estimation du retard

Avantageusement, l'indice local de confiance associé au paramètre de retard estimé est basé sur un rapport entre des valeurs de pics principal et secondaire de la fonction d'intercorrélation multiplié par l'énergie du bloc de référence.

Le fait d'associer une détection de pics de la fonction d'intercorrélation et un calcul de l'énergie du bloc de référence, permet d'obtenir un indice de confiance fiable.

Selon encore un autre aspect de l'invention, l'indice local de confiance associé au paramètre de position angulaire est basé sur la valeur maximale d'intercorrélation associée au retard $\tilde{\tau}_i$ estimé et sur un rapport entre l'énergie du bloc de référence et celle du bloc d'observation.

Selon encore un autre aspect de l'invention, les étapes d'estimation de retard et de position sont répétées pour la pluralité de blocs de référence de la trame du signal audio d'appoint et le procédé comprend en outre une étape de calcul d'indices de confiance globaux associés aux paramètres de mixage estimés pour la trame de référence, à partir des indices locaux calculés pour un bloc de référence de ladite trame et des indices globaux calculés pour la trame précédente et une étape de détermination de valeurs de paramètres de mixages pour la trame courante en fonction des indices de confiance globaux calculés.

Avantageusement, on choisit les valeurs de paramètres associées aux indices de confiances les plus élevés, de façon à rendre l'estimation la plus fiable et la plus robuste possible.

Le procédé qui vient d'être décrit dans ses différents modes de réalisation est avantageusement mis en oeuvre par un dispositif de traitement de données pour l'estimation de paramètres de mixage selon l'invention. Un tel dispositif comprend les unités suivantes :

- estimation d'un retard entre la composante omnidirectionnelle de la trame du signal audio principal et la trame dudit signal d'appoint, à partir d'un bloc de $N$ échantillons d'une trame d'un des deux signaux audio, dit bloc de référence, associé à un instant d'acquisition prédéterminé, et d'une zone d'observation de la trame de l'autre signal audio, dite zone d'observation, comprenant au moins un bloc de $N$ échantillons et formée dans un voisinage de l'instant d'acquisition, par maximisation d'une mesure de similarité entre le bloc de référence et un bloc de la zone d'observation, dit bloc d'observation, décalé temporellement du retard par rapport au bloc de référence; et

- estimation d'au moins une position angulaire de la source captée par ledit microphone d'appoint dans un référentiel du microphone principal par calcul d'un rapport entre un premier produit scalaire d'un bloc du signal audio d'appoint associé à l'instant d'acquisition prédéterminé et d'une première composante du bloc du signal audio principal décalé temporellement du retard ($\tau$) estimé et un deuxième produit scalaire du même bloc du signal audio d'appoint et d'une deuxième composante dudit bloc du signal audio principal décalé temporellement du retard ($\tau$) estimé.

Bien sûr, le dispositif de traitement de données selon l'invention peut être agencé pour mettre en oeuvre, de façon indépendante ou en combinaison, l'ensemble des modes de réalisation qui viennent d'être décrits pour le procédé de traitement.

Corrélativement, l'invention concerne aussi un procédé de mixage d'au moins un signal audio d'appoint et d'un signal audio principal représentatifs d'une même scène sonore composée d'une pluralité de sources acoustiques, le signal audio d'appoint étant capté par un dispositif de prise de son, dit microphone d'appoint, situé à proximité d'une source et le signal audio principal étant capté par un dispositif de prise de son ambisonique apte à capter la pluralité de sources, caractérisé en ce qu'il comprend les étapes suivantes :

- obtention de paramètres de mixages du signal audio d'appoint et du signal audio principal, lesdits paramètres étant estimés par le procédé de traitement selon l'invention, comprenant au moins un retard et d'au moins une position angulaire ;

- traitement du signal d'appoint au moins à partir du retard estimé ;

- encodage spatial du signal audio d'appoint retardé à partir d'au moins une position angulaire estimée ; et

- sommation des composantes dudit au moins un signal ambisonique d'appoint au signal ambisonique principal en un signal ambisonique global.

Avec l'invention, l'ingénieur du son bénéficie d'une assistance au mixage des signaux audio captés pour une même scène sonore. Le mixage peut être mis en oeuvre à partir des paramètres estimés automatiquement selon l'invention ou bien réajustés manuellement par l'ingénieur du son. Dans les deux cas, l'invention lui facilite la tâche et lui fait gagner du temps.

L'invention concerne aussi un terminal d'utilisateur comprenant un dispositif de mixage selon l'invention.

Avantageusement, le terminal d'utilisateur comprend aussi un dispositif de traitement de données pour l'estimation de paramètres de mixage selon l'invention. Selon une variante, il est apte à se connecter à un module externe comprenant un dispositif de traitement de données selon l'invention.

L'invention concerne encore un programme d'ordinateur comportant des instructions pour la mise en oeuvre des étapes d'un procédé de traitement de données pour l'estimation de paramètres de mixage tel que décrit précédemment, lorsque ce programme est exécuté par un processeur.

L'invention concerne aussi un programme d'ordinateur comportant des instructions pour la mise en oeuvre des étapes d'un procédé de mixage tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur. Par exemple, ils peuvent être enregistrés dans une mémoire d'un terminal d'utilisateur.

L'invention se rapporte enfin à des supports d'enregistrement, lisibles par un processeur, intégrés ou non au dispositif de traitement de données et au dispositif de mixage selon l'invention, éventuellement amovible, mémorisant respectivement un programme d'ordinateur mettant en oeuvre un procédé de traitement de données et un programme d'ordinateur mettant en oeuvre un procédé de mixage, tels que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1A** illustre de façon schématique un référentiel dans lequel un point est positionné à partir de ses coordonnées sphériques ;

- la figure **1B** illustre de façon schématique une représentation du format d'encodage spatial ambisonique aux ordres supérieurs ou HOA, selon l'art antérieur ;

- la figure **2** présente de façon schématique un exemple d'agencement d'un microphone principal et de plusieurs microphones d'appoint pour la captation d'une scène sonore ;

- la figure **3** illustre de façon schématique les trajets directs et indirects suivis par les ondes sonores depuis les sources qui composent la scène sonore jusqu'aux microphones ;

EP 3 079 074 A1

- la figure **4** illustre de façon schématique une position « apparente » d'une source acoustique située à proximité d'un microphone d'appoint dans le référentiel du microphone principal, selon l'invention;

- la figure **5** présente les étapes d'un procédé d'estimation de paramètres de mixages selon un mode de réalisation de l'invention ;

- les figures **6** illustre un découpage d'un signal audio en trames et en blocs selon un mode de réalisation de l'invention ;

- les figures **7A** et **7B** présentent des exemples de courbes de la mesure de similarité mise en oeuvre pour l'estimation d'un retard entre les signaux principal et d'appoint selon un premier et un deuxième mode de réalisation de l'invention ;

- la figure **8** présente les étapes d'un procédé de mixage du signal principal et de signaux d'appoint selon un mode de réalisation de l'invention ;

- la figure **9** présente de façon schématique la structure matérielle d'un dispositif d'estimation de paramètres de mixage selon un mode de réalisation de l'invention ; et

- la figure **10** présente de façon schématique la structure matérielle d'un dispositif de mixage selon un mode de réalisation de l'invention.

## 7. **Description d'un mode de réalisation particulier de l'invention**

Le principe général de l'invention repose sur le calcul de projections d'un signal audio capté par un microphone d'appoint sur les composantes d'un signal audio capté par un microphone principal et encodé au format ambisonique, et sur l'exploitation de ces projections pour estimer automatiquement des paramètres de mixage du signal d'appoint avec le signal principal.

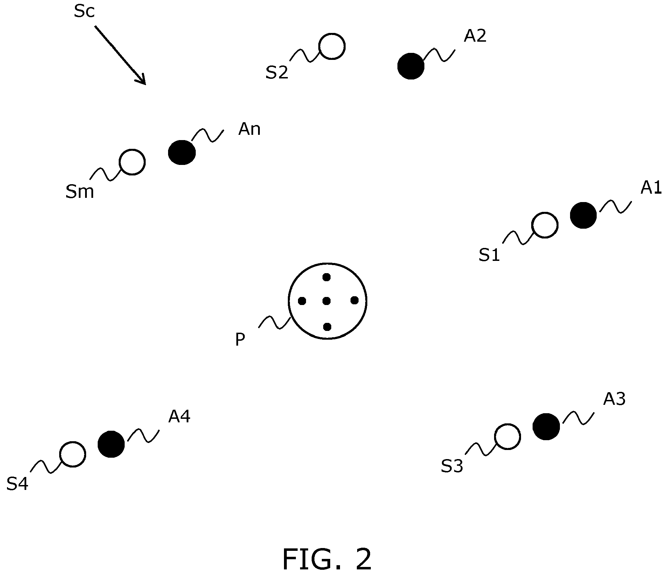

En relation avec la Figure **2**, on considère un microphone principal P, comprenant un système de capsules, au nombre de trois au minimum pour une scène en deux dimensions (2D), ou au nombre de quatre au minimum pour une scène en trois dimensions (3D). On utilise par exemple le microphone Soundfield® à l'ordre 1 ou le microphone Eigenmike® à l'ordre 4. Ces capsules sont agencées pour capter une scène sonore Sc dans plusieurs directions.

La scène sonore est formée de plusieurs sources acoustiques S1, S2,...Sm, avec m entier non nul. , distantes les unes des autres. Par exemple, une source est constituée d'un instrument de musique particulier. Le microphone principal P est avantageusement placé de façon centrale par rapport à la disposition de la pluralité de sources acoustiques. Un microphone d'appoint A1, A2, ...Am a été placé à proximité de chacune de ces sources.

On suppose que les microphones d'appoint sont monophoniques voire stéréophoniques, c'est-à-dire qu'ils sont aptes à capter un signal audio de manière monodirectionnelle voire bidirectionnelle.

Dans la suite, on considérera que les microphones d'appoint sont monophoniques et que le signal audio capté est de ce fait monodimensionnel.

Le microphone principal produit un signal audio multidimensionnel SP.

Pour recréer la scène sonore, il faut mixer les signaux du microphone principal et celui de chaque microphone d'appoint. Il s'agit d'ajuster le signal du microphone d'appoint dans le signal mixé, c'est-à-dire de définir les transformations d'amplitude et/ou de phase à appliquer au signal avant sa diffusion sur haut-parleurs, pour former une image sonore qui soit cohérente avec celle fournie par le microphone principal.

La cohérence recherchée doit être spatiale, et il faut préciser pour cela la position angulaire de celui-ci en espace (2D : azimut, 3D : azimut et élévation). Elle doit être aussi temporelle, c'est-à-dire que l'on doit réduire ou annuler le retard temporel entre les signaux d'appoint et les signaux du principal, afin d'éviter des effets d'écho ou de coloration (filtrage en peigne). Ce retard dépend de la distance entre le microphone d'appoint et le microphone principal, étant donné que les ondes acoustiques captées par microphone d'appoint arrivent vers microphone principal avec un retard qui est relié directement à la distance. Enfin, le dosage approprié de la source dans la scène globale se fait en ajustant le niveau du gain du signal d'appoint par rapport au signal du microphone principal.

On décrit maintenant les principes de l'estimation des paramètres de mixage d'un signal d'appoint avec le signal principal encodé au format HOA.

Les premières quatre composantes HOA du microphone principal s'expriment de la façon suivante:

$$\begin{cases} W(t) = p(t) \\ X(t) = \eta \cdot p(t) \cdot cos\theta \cdot cos\varphi \\ Y(t) = \eta \cdot p(t) \cdot sin\theta \cdot cos\varphi \\ Z(t) = \eta \cdot p(t) \cdot sin\varphi \end{cases} \tag{3}$$

où $\eta$ est le facteur de normalisation, et p(t) la pression acoustique du champ sonore capté. La première composante HOA $W(t)$ capte uniquement la pression acoustique et ne contient aucune information sur la position de la source acoustique.

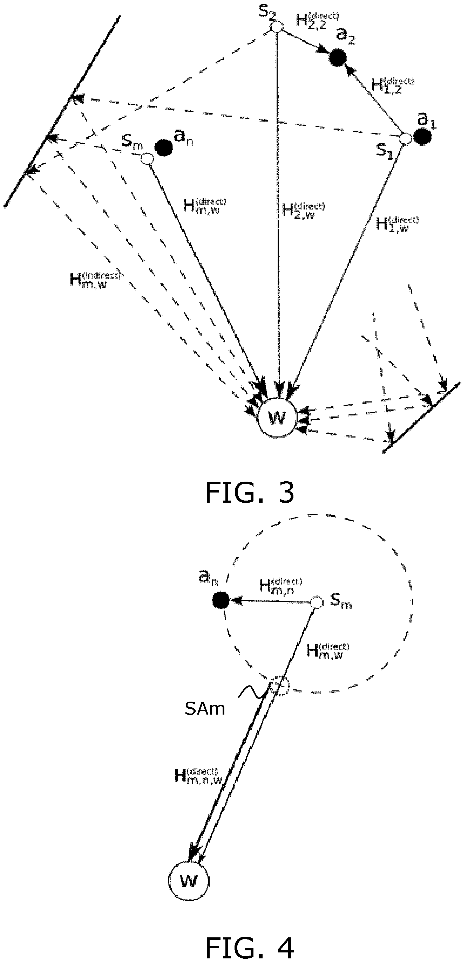

En relation avec la Figure **3**, on considère plus en détails la scène Sc précédente. Elle est composée de $M$ sources acoustiques émettant chacune un signal $s_m(t)$ vers les $N$ microphones d'appoint An et le microphone principal P.

En dissociant les transformations induites par les trajets directs et indirects, modélisés par une fonction de transfert $h_{mW}$, entre la source Sm et le microphone principal P, et en introduisant le bruit intrinsèque $v_W(t)$ de la composante omnidirectionnelle du microphone principal et les $N$ bruits intrinsèques $v_n(t)$ des microphones d'appoint, le champ de pression $W(t)$ capté par le microphone principal et les signaux d'appoint $a_n(t)$ sont alors donnés par :

$$W(t) = \sum_{m=1}^{M} \{[h_{m,W}^{(direct)} * s_m](t) + [h_{m,W}^{(indirect)} * s_m](t)\} + v_W(t) \tag{4}$$

$$a_n(t) = \sum_{m=1}^{M} \{[h_{m,n}^{(direct)} * s_m](t) + [h_{m,n}^{(indirect)} * s_m](t)\} + v_n(t) \tag{5}$$

L'équation (4) se généralise aux autres composantes du microphone principal en remplaçant $W$ par $X,Y,Z$.

Pour simplifier l'écriture, on modélise simplement la transformation du trajet direct par un retard $\tau_{m,W}$ et un gain $g_{m,W}$. On notera qu'en réalité la fonction de transfert $h_{m,W}$ devrait dépendre de la fréquence pour traduire les effets de rayonnement, de directivité et d'autres caractéristiques acoustiques.

$$h_{m,W}^{(direct)} = g_{m,W} \cdot \delta(t - \tau_{m,W}) \tag{6}$$

avec $\delta$ symbole de Kronecker

Donc les équations (4), (5) deviennent :

$$W(t) = \sum_{m=1}^{M} \{g_{m,W} \cdot s_m(t - \tau_{m,W}) + [h_{m,W}^{(indirect)} * s_m](t)\} + v_W(t) \tag{7}$$

$$a_n(t) = \sum_{m=1}^{M} \{g_{m,n} \cdot s_m(t - \tau_{m,n}) + [h_{m,n}^{(indirect)} * s_m](t)\} + v_n(t) \tag{8}$$

$g_{m,W}$ - respectivement $g_{m,n}$ - décrit l'atténuation (ou l'amplification) du signal de la m-ième source acoustique telle que captée par le microphone principal - respectivement par le n-ième microphone d'appoint.

Les gains associés à $_{X,Y,Z}$ traduisent en plus l'encodage directionnel de la source sonore :

$$\begin{cases} g_{m,X} = g_{m,W} \cdot \eta \cdot cos\theta_m \cdot cos\varphi_m \\ g_{m,Y} = g_{m,W} \cdot \eta \cdot sin\theta_m \cdot cos\varphi_m \\ g_{m,Z} = g_{m,W} \cdot \eta \cdot sin\varphi_m \end{cases} \tag{9}$$

En général on considère que la contribution directe est plus importante que la contribution indirecte en termes d'énergie. C'est le cas en particulier, lorsque l'ingénieur du son a placé les microphones d'appoint de façon à ce que chacun d'eux capte une source sonore de façon privilégiée. Dans la suite de la description, on supposera que cette hypothèse est vérifiée et que chaque microphone d'appoint An est associé à une source acoustique Sm et m =n.

Pour simplifier l'écriture des équations on associe le même indice m=n au microphone d'appoint et à la source sonore privilégiée.

Pour effectuer l'estimation des paramètres, on ne dispose que des signaux du microphone principal et ceux des microphones d'appoint, mais pas ceux des sources sonores en elles-mêmes.

En relation avec la Figure **4**, on cherche à extraire les retards $\tau_{m,W}$, entre la source Sm et le microphone principal P, et $\tau_{m,n}$ entre la source et le microphone d'appoint An, à partir des signaux captés.

En pratique, il est très difficile d'estimer les retards $\tau_{m,W}$ et $\tau_{m,n}$ à partir des seuls signaux captés.

Néanmoins, comme le montre la Figure **4**, on considère la différence de retard entre $\tau_{m,W}$ et $\tau_{m,n}$, retard entre le signal d'appoint et le signal émis par la source Sm.

Le signal émis par la source Sm est perçu de la même manière et avec le même retard $\tau_{m,n}$ en tous les points d'un cercle (représenté en pointillés sur la Figure **4**) centré sur la source Sm et de rayon égal à la distance entre la source et le microphone d'appoint, en particulier, au point SAm de ce cercle situé sur la droite reliant le microphone principal P à la source Sm. Le point SAm, situé dans la direction de la source Sm réelle pour le microphone principal, peut être vu comme une source apparente pour le microphone principal. Vu qu'on ne connait pas la distance entre la source Sm et le microphone d'appoint An, l'analyse des signaux principal et d'appoint, laisse une indétermination sur la distance de la source au microphone principal. Ce point dit de «source apparente» correspond la distance minimale à laquelle peut se situer la source du microphone principal. Il représente la position qu'aurait la source Sm si elle était située juste à côté du microphone d'appoint An, de telle sorte qu'il n'y ait pas de retard entre source et appoint. En ce point, le retard entre signal principal et signal d'appoint correspond à la différence des retards entre source/principal et source/appoint.

On considère la différence $\tau_{m,n,W}$ entre $\tau_{m,W}$ et $\tau_{m,n}$ :

$$\tau_{m,n,W} = \tau_{m,W} - \tau_{m,n} \qquad (10)$$

$\tau_{m,n,W}$ représente le retard entre le signal d'appoint et le signal principal en ce point SAm. C'est donc ce retard qui devra être appliqué au microphone d'appoint pour le synchroniser au microphone principal.

Pour calculer ce retard, on peut avantageusement recourir à une fonction d'intercorrélation normalisée qui s'applique à deux signaux temporels $x(t)$ et $y(t)$ non-périodiques et qui s'exprime comme suit :

$$\chi_{x,y}(\tau) = \frac{\langle x(t)|y(t-\tau)\rangle}{\|x\| \cdot \|y\|} = \frac{\langle x|y\rangle_\tau}{\|x\| \cdot \|y\|} = \frac{\int_{-\infty}^{+\infty} x(t)y(t-\tau)dt}{\|x\| \cdot \|y\|} \qquad (11)$$

où $\chi_{x,y}(\tau)$ est une mesure de similarité entre le signal $x(t)$ et le signal $y(t)$ retardé de $\tau$; $\|x\|$, $\|y\|$ sont les normes Euclidiennes $L^2$ des signaux $x(t)$ et $y(t)$.

L'intercorrélation $\chi_{x,y}(\tau)$ est une mesure de similarité entre le signal $x(t)$ et le signal $y(t)$ retardé de $\tau$, calculée ici sur un support temporel continu et infini. En pratique, la mesure s'effectue sur des signaux audionumériques à support discret (échantillonné) et borné : on ne considère pour x (resp. y) qu'un vecteur d'échantillon successifs représentatifs de ce que l'on veut caractériser autour d'instant donné. Par commodité pour la suite, et afin de pouvoir généraliser la définition de l'intercorrélation, on introduit la notation de produit scalaire entre deux signaux décalés temporellement :

$$\langle x(t-\tau_1)|y(t-\tau_2)\rangle = {}_{\tau_1}\langle x|y\rangle_{\tau_2} = \int_{-\infty}^{+\infty} x(t-\tau_1)y(t-\tau_2)dt \qquad (12)$$

pour un support continu infini.

Pour un support discret fini, on définit ce produit scalaire ainsi :

$$_{d_1}\langle x|y\rangle_{d_2} = \sum_{k=K_1}^{K_2} x(k-d_1)y(k-d_2)$$

$$(13)$$

où $k = t \cdot f_s$ est l'indice temporel discret, avec $f_s$ la fréquence d'échantillonnage, $d_1 = \tau_1 \cdot f_s$ et $d_2 = \tau_2 \cdot f_s$ les indices de décalage temporel, et $K_1$ et $K_2$ les bornes du support temporel qu'on ne fera pas apparaître dans la notation dans un souci de lisibilité. Par ailleurs, dans la suite du document, nous considérerons les variables comme discrètes, et les fonctions à support fini, tout en continuant d'utiliser la notation $_{\tau_1}\langle x|y\rangle_{\tau_2}$ plutôt que $_{d_1}\langle x|y\rangle_{d_2}$, avec les correspondances qui viennent d'être établies.

On notera que $\langle x|y\rangle_\tau = \langle x|y\rangle_\tau$ et $_\tau\langle x|y\rangle = {}_\tau\langle x|y\rangle_0$, et en introduisant la notation suivante pour la norme d'un signal discret à support fini : $\|x\|_\tau = \sqrt{{}_\tau\langle x|x\rangle_\tau}$, on notera que $\|x\| = \|x\|_0$.

Ainsi pour des signaux discrets à support fini (bornes $K_1$ et $K_2$), la fonction d'intercorrélation normalisée s'exprime de la manière suivante:

$$\chi_{x,y}(\tau) = \frac{\langle x|y\rangle_\tau}{\|x\| \cdot \|y\|_\tau}$$

$$(14)$$

La présence de l'indice $\tau$ pour la norme de $y$ indique que la valeur de cette norme va dépendre du décalage appliqué à ce signal discret à support fini.

Après avoir introduit ces notations, nous allons montrer comment appliquer cette fonction d'intercorrélation au calcul du retard $\tau_{m,n,W}$ entre le signal d'appoint An et le signal principal P.

Pour estimer le retard, on applique la fonction d'intercorrélation normalisée aux signaux $W(t)$ et $a_n(t)$ en remplaçant $W(t)$ par le second membre de l'équation (7):

$$\chi_{W,a_n}(\tau) = \frac{\langle W|a_n\rangle_\tau}{\|W\| \cdot \|a_n\|_\tau} = \frac{\langle g_{m,W} \cdot s_m(t-\tau_{m,W})|a_n(t)\rangle_\tau}{\|W\| \cdot \|a_n\|_\tau}$$

$$(15)$$

où $\tau_{m,W}$ est le retard entre la source et le microphone principal, sous les hypothèses suivantes :

- les trajets indirects et les bruits intrinsèques sont négligés
- sur une plage temporelle d'observation donnée, une seule source m est active.

Or le signal $s_m$ est relié au signal $a_n$ grâce à l'équation (8), sous les mêmes hypothèses:

$$a_n(t) = g_{m,n} \cdot s_m(t-\tau_{m,n})$$

$$(16)$$

On en déduit donc $s_m$ en fonction de $a_n$ :

$$s_m(t) = \frac{1}{g_{m,n}} a_n(t+\tau_{m,n})$$

$$(17)$$

Cette équation peut également s'écrire de la manière suivante :

$$s_m(t-\tau_{m,W}) = \frac{1}{g_{m,n}} a_n(t+\tau_{m,n}-\tau_{m,W})$$

$$(18)$$

Il en résulte que l'équation (15) peut s'écrire :

$$\frac{\langle W|a_n\rangle_\tau}{\|W\|\cdot\|a_n\|_\tau} = \frac{\left\langle \frac{g_{m,W}}{g_{m,n}} a_n\big(t+\tau_{m,n}-\tau_{m,W}\big)\Big|a_n(t)\right\rangle_\tau}{\|W\|\cdot\|a_n\|_\tau} \tag{19}$$

Or, en posant $g_{m,n,W}=\frac{g_{m,W}}{g_{m,n}}$ , et $\tau_{m,n,W}=-(\tau_{m,n}-\tau_{m,W})$, l'équation (19) peut aussi s'écrire à l'aide de l'équation (13):

$$\frac{\langle W|a_n\rangle_\tau}{\|W\|\cdot\|a_n\|_\tau} = \frac{g_{m,n,W}\cdot\tau_{m,n,W}\langle a_n|a_n\rangle_\tau}{\|W\|\cdot\|a_n\|_\tau} \tag{20}$$

Il est possible de simplifier encore cette équation en exprimant la norme de *W* grâce aux équations (16) puis (18), et en profitant des notations proposées, d'où :

$$\|W(t)\| = \big\|g_{m,n,W}\cdot a_n\big(t-\tau_{m,n,W}\big)\big\| \tag{21}$$

Il en résulte que l'équation (20) peut s'exprimer de la manière suivante :

$$\frac{\langle W|a_n\rangle_\tau}{\|W\|\cdot\|a_n\|_\tau} = \frac{g_{m,n,W}\cdot\tau_{m,n,W}\langle a_n|a_n\rangle_\tau}{\big\|g_{m,n,W}\cdot a_n\big(t-\tau_{m,n,W}\big)\big\|\cdot\|a_n\|_\tau} \tag{22}$$

En considérant les gains représentés par $g_{m,n,W}$ comme positifs, cette équation se simplifie de la manière suivante :

$$\frac{\langle W|a_n\rangle_\tau}{\|W\|\cdot\|a_n\|_\tau} = \frac{\tau_{m,n,W}\langle a_n|a_n\rangle_\tau}{\|a_n\|_{\tau_{m,n,W}}\cdot\|a_n\|_\tau} \tag{23}$$

On remarque que le second membre de l'équation (23) correspond à la fonction d'intercorrélation normalisée entre le signal $a_n(t-\tau_{m,n,W})$ et le signal $a_n(t)$. Il en résulte que lorsque $\tau=\tau_{m,n,W}$ la fonction (23) donne une valeur maximale unitaire.

Ainsi, pour trouver la valeur recherchée $\tau_{m,n,W}$, il suffit d'identifier la valeur $\tau$ pour laquelle l'intercorrélation normalisée entre les signaux connus $W(t)$ et $a_n(t)$ est maximale. Dans le cas d'usage général, les signaux de plusieurs sources sont présents dans le signal principal $W(t)$ alors que le signal appoint $a_n(t)$ est beaucoup plus représentatif de la source sonore dont on veut estimer les paramètres (surtout en l'absence de diaphonie). Il est donc plus judicieux de prendre un morceau du signal d'appoint comme référence et de rechercher dans le signal principal W(t) avec quel décalage temporel on trouve le morceau de signal qui lui ressemble le plus. Autrement dit, on préconise de considérer comme fonction d'intercorrélation normalisée :

$$C(\tau) = \frac{\langle a_n|W\rangle_{-\tau}}{\|a_n\|.\|W\|_{-\tau}} \tag{24}$$

Comme en pratique c'est a priori le signal $W(t)$ qui est en retard sur le signal d'appoint $a_n(t)$, il s'agit donc généralement de faire une recherche dans W(t) sur une portion de signal plus récente que la portion de signal $a_n(t)$ prise comme référence.

On introduit donc l'estimateur $\tilde{\tau}$ (mais aussi $\tilde{\theta}$, $\tilde{\varphi}$, $\tilde{g}$) associé au paramètre recherché $\tau_{m,n,W}$ (et respectivement $\theta_n$, $\varphi_n$, $g_{m,n,W}$). On définit le retard cible estimé comme le maximum de la fonction d'intercorrélation normalisée de l'équation (24) :

$$\tilde{\tau} = \underset{\tau}{\mathrm{Argmax}}(C(\tau)) \tag{25}$$

A partir de ce retard estimé, on obtient la première coordonnée sphérique r du signal d'appoint $a_n(t)$ dans le référentiel du microphone principal.

Il s'agit ensuite d'estimer les deuxième et troisième coordonnées sphériques, à savoir les angles d'azimut et d'élévation ($\theta_n$ et $\varphi_n$) à partir du retard estimé $\tilde{\tau}$.

Selon l'invention, on considère les 3 composantes HOA bidirectionnelles $X, Y, Z$ et on calcule le produit scalaire entre le signal du microphone principal et le signal du microphone d'appoint retardé de $\tilde{\tau}$.

Les produits scalaires s'écrivent comme suit :

$$\begin{cases} \langle X|a_n\rangle_{\tilde{\tau}} = \eta \cdot \langle W|a_n\rangle_{\tilde{\tau}} \cdot cos\theta_n \cdot cos\varphi_n \\ \langle Y|a_n\rangle_{\tilde{\tau}} = \eta \cdot \langle W|a_n\rangle_{\tilde{\tau}} \cdot sin\theta_n \cdot cos\varphi_n \\ \langle Z|a_n\rangle_{\tilde{\tau}} = \eta \cdot \langle W|a_n\rangle_{\tilde{\tau}} \cdot sin\varphi_n \end{cases} \qquad (26)$$

Pour calculer l'azimut $\theta_n$ et l'élévation $\varphi_n$ du signal capté par le microphone d'appoint $a_n$ situé à proximité de la source acoustique, on se place sous les mêmes hypothèses que précédemment:

- les trajets indirects et les bruits intrinsèques sont négligés
- sur une plage temporelle d'observation donnée, une seule source m est active.

Le rapport entre la deuxième et la première équation du système (26) permet d'obtenir l'azimut $\tilde{\theta}$ à travers de la fonction atan2.

$$\tilde{\theta}_n = \text{atan2}(\langle Y|a_n\rangle_{\tilde{\tau}}, \langle X|a_n\rangle_{\tilde{\tau}}) \qquad (27)$$

La fonction atan2 présente l'avantage de fournir des mesures d'angles comprises dans un intervalle [$-\pi, \pi$] alors que la fonction arctangente classique ne permet d'obtenir les angles que dans un intervalle $\left[-\frac{\pi}{2}, \frac{\pi}{2}\right]$, ce qui laisse une ambiguïté sur des angles diamétralement opposés.

On déduit l'élévation $\tilde{\varphi}$ de la dernière équation du système (26):

$$\langle Z|a_n\rangle_{\tilde{\tau}} = \eta \cdot \langle W|a_n\rangle_{\tilde{\tau}} \cdot sin\tilde{\varphi}_n \quad \Rightarrow \quad \tilde{\varphi}_n = \arcsin\left(\frac{\langle Z|a_n\rangle_{\tilde{\tau}}}{\eta \cdot \langle W|a_n\rangle_{\tilde{\tau}}}\right) \qquad (28)$$

A partir de l'estimateur $\tilde{\tau}$ donné par l'équation (25) le niveau du gain $\tilde{g}_{m,n,W}$ peut être estimé comme un rapport entre le produit scalaire du signal de microphone principal et du signal de microphone d'appoint, et le produit scalaire du signal de microphone d'appoint par lui-même :

$$\tilde{g}_{m,n,W} = \frac{\langle W|a_n\rangle_{\tilde{\tau}}}{_{\tilde{\tau}}\langle a_n|a_n\rangle_{\tilde{\tau}}} \qquad (29)$$

On notera que les estimateurs ci-dessus font appliquer un retard au signal d'appoint $a_n(t)$ alors que c'est au signal principal $W(t)$ que l'on a appliqué un retard opposé pour la recherche dudit retard. Ces estimateurs restent valables, en considérant qu'ils s'appliquent avec un décalage temporel supplémentaire commun aux deux signaux. En rectifiant cet aspect, on obtient finalement tous les paramètres qui permettent de retarder, spatialiser et mixer le microphone d'appoint au microphone principal :

$$\tilde{\tau} = \underset{\tau}{\text{Argmax}}\, C_i(\tau) \qquad (30)$$

$$\tilde{\theta}_n = \text{atan2}(\langle a_n|Y\rangle_{-\tilde{\tau}}, \langle a_n|X\rangle_{-\tilde{\tau}}) \qquad (31)$$

$$\tilde{\varphi}_n = \arcsin\left(\frac{\langle a_n | Z \rangle_{-\tilde{\tau}}}{\eta \cdot \langle a_n | W \rangle_{-\tilde{\tau}}}\right) \qquad (32)$$

$$\tilde{g}_{m,n,W} = \frac{\langle a_n | W \rangle_{-\tilde{\tau}}}{\|a_n\|^2} \qquad (33)$$

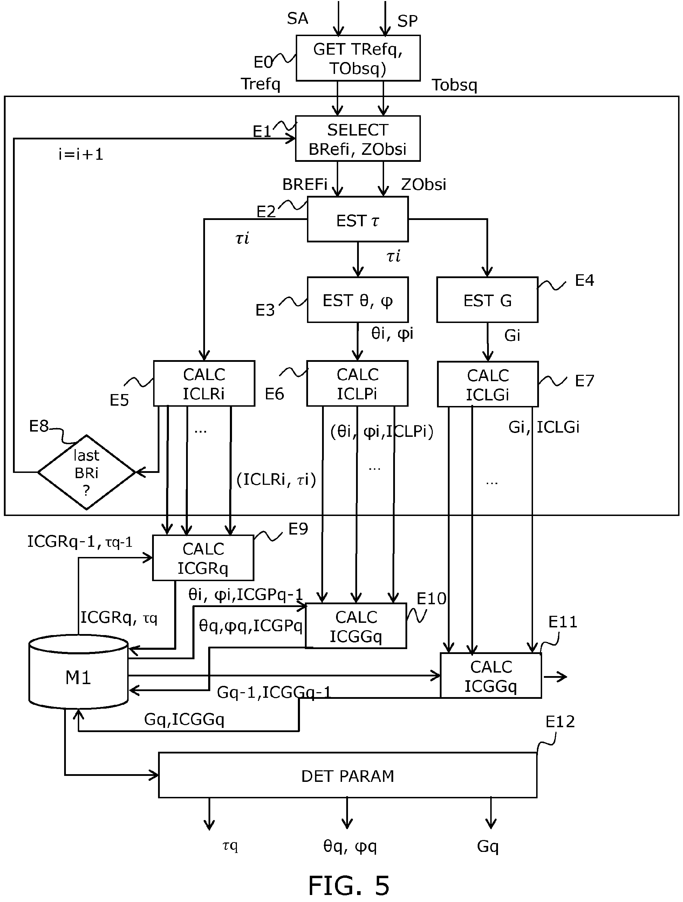

En relation avec la Figure **5**, on décrit les étapes d'un procédé de traitement de données pour l'estimation de paramètres de mixage selon un mode de réalisation de l'invention. Un tel procédé s'appuie sur les principes qui viennent d'être présentés, que l'on applique à des trames de signaux discrets. Une trame est une partie d'un signal audio capté par un microphone, qui est échangée régulièrement entre un module externe d'acquisition et un dispositif de traitement de données pour l'estimation de paramètres de mixage selon l'invention. Elle est ensuite stockée dans une mémoire ou buffer. On considère qu'elle comprend *N* échantillons, avec *N* entier non nul.

Dans la suite de la description, on désigne par signal de référence le signal audio capté par le microphone d'appoint An. On désigne par signal d'observation le signal *W* de la première composante (omnidirectionnelle) HOA du microphone principal. Le signal de référence et celui d'observation sont divisés en trames.

On nomme $TRef_q$ une trame du signal de référence et $TObs_q$ une trame du signal d'observation.

Bien sûr, comme précédemment évoqué, on pourrait, de façon inverse, choisir le signal principal comme signal de référence et le signal d'appoint comme signal d'observation.

Le signal audio d'appoint contient des éléments susceptibles d'être identifiés également dans le signal audio capté par le microphone principal, ou signal d'observation. Le signal d'observation comprend une partie du signal de référence décalé temporellement. Il s'agit du signal acoustique émis par la source Sm à proximité de laquelle on a placé le microphone d'appoint An. On considère en outre un bloc de référence BRef comme un morceau du signal de référence comportant *nBRef* échantillons. Idéalement, celui-ci comporte un fragment de signal caractéristique, facilement identifiable, comme par exemple une partie de signal transitoire. Une trame de référence est généralement constituée de plusieurs BRef.

Dans le signal d'observation, on considère une zone d'observation Zobs comme un morceau du signal d'observation qui comporte idéalement une partie du signal de référence retardé. La taille d'une telle zone d'observation (nZObs) est choisie en fonction d'une distance maximale possible (DMP) entre le microphone d'appoint et le microphone principal. On peut aussi s'appuyer sur les résultats obtenus pour l'estimation de paramètres de mixages pour le bloc de référence précédent.

On désigne par *bloc d'observation (BObs)* un bloc de *nBRef* échantillons de la zone d'observation. Ce bloc est glissant dans la zone d'observation.

Au cours d'une étape E0, on obtient en entrée une trame de référence $TRef_q$, avec q entier non nul, captée par le microphone d'appoint An et une trame d'observation $TObs_q$ captée par le microphone principal P.

En E1, on sélectionne un bloc de référence $BRef_i$ dans la trame de référence $TRefq$. Il débute à l'instant ti.

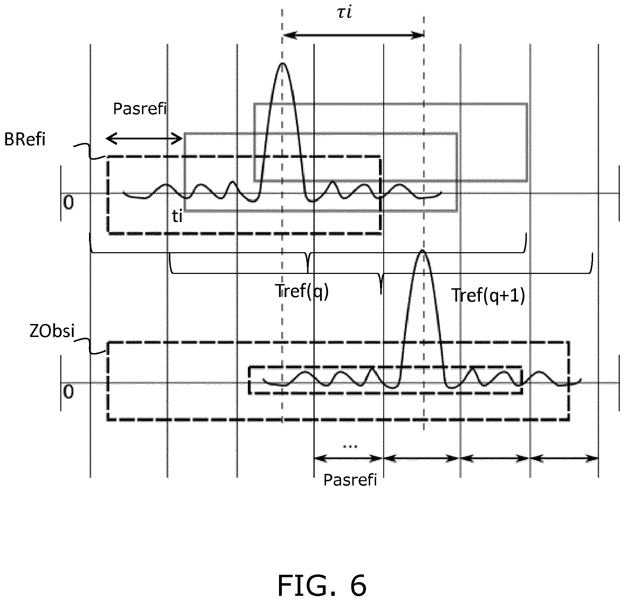

En relation avec la Figure **6**, chaque trame de référence (indexée par l'indice q) $TRefq$ est constituée d'un ou plusieurs blocs de référence (indexés par l'indice i) $BRef_i$. Les blocs de référence au sein d'une trame de référence peuvent être disjoints, accolés, ou se chevaucher. Avantageusement, on utilise un pas d'avancement du Bloc de Référence noté $PasRef_i$. Ce pas peut être constant, de taille nBRef (blocs accolés), supérieur (blocs disjoints) ou inférieur (blocs se chevauchant), mais ce pas peut également être variable, de sorte à s'adapter au signal, afin par exemple de s'ajuster à une caractéristique intéressante du signal comme un transitoire qui sera plus facilement identifiable dans la zone d'observation $ZObs_i$. Au sein d'une Trame TRef, on passe donc d'un bloc $BRef_i$ au bloc suivant $BRef_{i+1}$ en se déplaçant de $PasRef_i$ échantillons.

Chaque trame d'observation (indexée par l'indice q) $TObs_q$ est constituée d'une ou plusieurs zones d'observation (indexées par l'indice i) $ZObs_i$ relatives aux Blocs de Référence $BRef_i$. La taille nZObs de la Zone d'Observation $ZObs_i$ est donnée par la somme de la taille du Bloc de Référence (nBRef) et du retard maximal possible (RMP) entre le microphone d'appoint et le microphone principal (RMP=DMP/céléritéSon, où céléritéSon≈340m/s). Il faut noter que la taille de la zone d'observation peut être variable en fonction des estimations effectuées (par exemple, si la source n'est que très faiblement mobile, il est inutile d'aller chercher un retard très différent de celui qui a été trouvé précédemment).

Au sein d'une zone d'observation, on définit les blocs d'observation comme des blocs successifs de taille nBRef (même taille que BRef) séparés de PasObs échantillons. Ce pas est généralement constant et égal à 1 (cas de l'intercorrélation classique), mais peut être plus grand (voire variable, voire encore lié à une approche d'optimisation) afin de diminuer la puissance de calcul nécessaire à l'intercorrélation (routine la plus coûteuse de l'algorithme). Les blocs d'observation ne sont introduits que pour expliciter précisément le calcul de similarité (intercorrélation).

On définit $zObs_i$ comme le signal dans la zone d'observation $ZObs_i$, contenue dans le signal *principal W*, et $bRef_i$ désigne le signal de référence dans le bloc de référence $BRef_i$, contenu dans le signal d'appoint $a_n$. Pour le bloc d'indice i, la fonction d'intercorrélation à considérer est alors :

$$C_i(\tau) = \frac{\langle bRef_i | zObs_i \rangle_{-\tau}}{\|bRef_i\| . \|zObs_i\|_{-\tau}} \qquad (34)$$

Au cours d'une étape E2, on estime le retard $\tilde{\tau}$ à partir de l'équation (24) précédemment décrite, c'est-à-dire en recherchant dans la zone d'observation $ZObs_i$ le bloc d'observation $BRef_i$ qui maximise la fonction d'intercorrélation normalisée de l'équation (34).

Selon un premier mode de réalisation de l'invention, on estime le retard qui maximise la mesure de similarité $C_i(\tau)$ calculée pour le bloc de référence courant $BRef_i$. Un avantage de ce mode est qu'il est simple à mettre en oeuvre et ne nécessite pas de ressources de stockage.

Selon un deuxième mode de réalise de l'invention, on calcule la mesure de similarité sur plusieurs blocs consécutifs, comprenant le bloc de référence courant $BRef_i$ et au moins un bloc précédent $BRef_{i-1}$. On effectue ainsi un lissage temporel de la fonction d'intercorrélation sur la pluralité de blocs de référence successifs de manière à mieux faire émerger parmi les différents pics de chaque courbe celui qui reste stable dans le temps, et qui correspond au retard recherché.

Ce lissage temporel peut être mise en oeuvre par moyennage normalisé des mesures de similarité calculées :

$$C_i^{'}(\tau) = \frac{1}{K+1} \sum_{k=0}^{K} C_{i-k}(\tau) \quad (35)$$

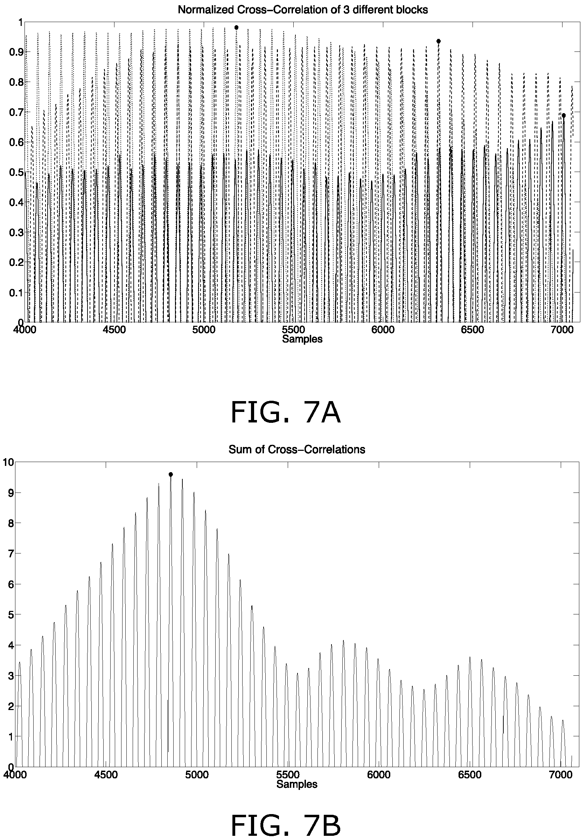

Un avantage est que cette méthode est simple. En relation avec les figures **7A** et **7B**, on illustre le résultat de ce calcul pour une recherche de retard associé à une voix chantée, mélangée dans le signal du microphone principal à neuf autres sources sonores (instruments à cordes et à vent). Dans cet exemple, l'observation a été faite sur dix blocs de référence successifs, et trois courbes sont affichées (Figure **7A**) parmi les dix fonctions d'intercorrélation associées. On notera qu'on a mis les valeurs négatives à 0 pour plus de lisibilité. On constate que ces courbes présentent chacune de nombreux pics parmi lesquels un est commun à toutes et correspond au retard $\tilde{\tau}$ recherché. En revanche, le pic maximal de chaque courbe est placé ailleurs, du fait de la perturbation occasionnée par les autres sources concurrentes dans le signal du microphone principal.

En relation avec la Figure **7B**, on présente une courbe correspondant à une moyenne des mesures de similarités calculées pour les dix blocs de référence successifs. On constate qu'elle fait ressortir le pic commun à toutes les courbes, les autres s'effaçant. Le point de la valeur maximale correspond bien au retard recherché.

Naturellement, d'autres lissages temporels sont possibles, réalisables par toute forme de filtrage temporel. Ainsi, à titre d'exemple, on peut appliquer un filtre à réponse impulsionnelle finie (pour Finite Impulse Response ou FIR, en anglais) :

$$C_i^{'}(\tau) = \sum_{k=0}^{K} b_k \cdot C_{i-k}(\tau) \qquad (36)$$

où $K$ désigne la profondeur du filtre et $b_k(\tau)$ les coefficients du filtre. On utilise alors la fonction $C_i^{'}(\tau)$ à la place de $C_i(\tau)$ pour la recherche du retard dans l'équation (30).

Un cas particulier est le moyennage décrit ci-dessus, qui revient à fixer $b_k = 1/(K + 1)$.

On notera que ce filtrage FIR nécessite de mémoriser K vecteurs de valeurs d'intercorrélation passées.

De façon alternative, on peut appliquer un filtrage à réponse à impulsionnelle infinie (pour Infinite Impulse Response ou IIR, en anglais). Un cas particulier que l'invention propose est d'appliquer un filtre autorégressif d'ordre 1, qui a l'avantage de ne nécessiter la mémorisation que d'un vecteur d'intercorrélation lissée :

$$C_i^{'}(\tau) = \alpha \cdot C_{i-1}^{'}(\tau) + (1-\alpha) \cdot C_i(\tau) \quad (37)$$

Ce filtrage est paramétré par un facteur d'oubli $\alpha$ compris entre 0 et 1, qui peut être fixe ou bien adaptatif, piloté au cours du temps en fonction d'indicateurs du signal. S'il est fixe, on peut l'associer à un temps de convergence cible. Ainsi, si l'on passait d'une situation stationnaire où $C_i(\tau) = C_A$, $i < i_0$ à une autre situation stationnaire où $C_i(\tau) = C_B$, $i \geq i_0$, $C'_i(\tau)$ parcourrait pc% (par exemple pc=90%) de la distance entre $C_A$ et $C_B$ en K itérations, avec K tel que

$\alpha = \left(1 - \frac{pc}{100}\right)^K$, le nombre d'itérations K étant lui-même convertible en un temps de convergence à pc% en le multipliant par l'intervalle entre deux blocs de référence successifs. Si on choisit de rendre le facteur d'oubli adaptatif, on lui attribuera une valeur faible lorsque de la nouvelle information disponible est consistante et sans ambiguïté sur le retard estimé, et à l'inverse une valeur proche de 1 lorsque les nouvelles valeurs d'intercorrélation sont faibles par exemple. Un indicateur du signal possible pour piloter le facteur d'oubli au cours de temps est la valeur maximale de la fonction d'intercorrélation normalisée.

A titre d'exemple et sans restriction de l'invention, on peut exprimer le facteur d'oubli de la façon suivante :

$$\alpha = \alpha_{min} + F(C_{max}).(\alpha_{max} - \alpha_{min}) \qquad (38)$$

où $C_{max}$ désigne la valeur maximale de $C_i(\tau)$ et F est une fonction décroissante sur [0,1] ayant pour bornes 0 et 1. Par exemple, $F(C_{max}) = (1 - C_{max}^P)$ où $P$ est choisi (typiquement supérieur à 1, par exemple 3) pour permettre de réserver des valeurs faibles de $F(C_{max})$ au cas où la corrélation serait très proche de 1. De cette façon, $\alpha$ varie entre une valeur minimale $\alpha_{min}$ (par exemple 0,5) atteinte lorsque la corrélation est parfaite ($C_{max} = 1$) et une valeur maximale $\alpha_{max}$ (par exemple 0.99) lorsque la corrélation est très faible. Les valeurs minimale et maximale peuvent être déterminées en fonction de temps de convergence associés.

Au cours d'une étape E3, on estime la position angulaire du signal d'appoint par rapport au référentiel du microphone principal.

L'angle d'azimut $\tilde{\theta}_n$ est estimé à l'aide de l'équation (26) précédemment décrite.

L'angle d'élévation $\tilde{\varphi}_n$ est estimé à l'aide de l'équation (27) précédemment décrite.

Au cours d'une étape E4, on estime le niveau de gain $\tilde{g}_{m,n,W}$ entre le signal de référence et le signal d'observation, à partir de l'équation (28) précédemment décrite.

On comprend que ces estimations qui sont instantanées peuvent fluctuer d'un bloc de référence à l'autre.

Au cours des étapes E5, E6, E7 qui vont maintenant être décrites, on calcule une valeur d'indice de confiance local (ICL), représentatif d'un niveau de confiance qu'on associe aux paramètres précédemment estimés pour le bloc de référence $BRef_i$.

On considère l'indice de confiance local ICLR associé au Retard, l'indice de confiance local ICLP associé à la position angulaire de la source acoustique (azimut, élévation) et l'indice de confiance local ICLG associé au niveau du Gain.

En E5, selon une réalisation particulière, l'Indice de Confiance Local ICLR associé au Retard est calculé à partir de deux valeurs de la fonction d'intercorrélation précédemment décrite et d'une estimation de l'énergie du Bloc de Référence. On peut donc exprimer ICLR de la manière suivante :

$$ICLR_i = Ratio_i \cdot E_{ref_i} \qquad (39)$$

où $Ratio_i$ est défini (plus loin en détail) comme le rapport entre les deux premiers pics de la fonction d'intercorrélation dans le Bloc de Référence $BRef_i$, et $E_{ref_i}$ est l'énergie du Bloc de Référence $BRef_i$.

Il est à noter que dans le cas d'un signal périodique, au sein d'un Bloc de Référence, la fonction d'intercorrélation risque de fournir plusieurs valeurs maximales, correspondant à plusieurs pics. En présence de bruit, la sélection de la valeur maximale peut donc aboutir à une erreur sur la valeur de retard, correspondant à un multiple de la période fondamentale du signal. On note également qu'en présence d'une attaque ou d'un « transitoire » selon un terme consacré du domaine du traitement du signal, la fonction d'intercorrélation présente généralement un pic principal bien distinct. On en déduit qu'une fonction qui permet de déterminer des différences d'amplitude entre les 2 pics principaux de la fonction d'intercorrélation permet de fournir une information robuste (plus robuste que la valeur maximale de l'intercorrélation, qui peut être maximale dans le cas d'un signal périodique) sur le niveau de confiance à accorder à l'estimateur du retard.

On peut écrire l'équation (25) à travers de la notation introduite et exprimer le retard estimé correspondant au maximum du pic principal de la fonction d'intercorrélation ($\tilde{\tau}_{princ_i}$ ou $\tilde{\tau}_i$) et le deuxième retard $\tilde{\tau}_{sec_i}$ correspondant au pic secondaire:

$$\tilde{\tau}_{princ_i} = \tilde{\tau}_i = \underset{\tau}{\mathrm{Argmax}}\, C'_i(\tau) \tag{40}$$

$$\tilde{\tau}_{sec_i} = \underset{\tau \neq \tilde{\tau}_{i,}}{\mathrm{Argmax}}\, C'_i(\tau) \tag{41}$$

Afin de ne pas prendre en compte les voisins de la valeur maximale de l'intercorrélation qui appartiennent au même pic (ce qui correspond à la décroissance naturelle de la fonction d'intercorrélation), il est nécessaire d'exclure un certain voisinage. Dans une réalisation particulière, on peut exclure toutes les valeurs successives voisines inférieures à 5% de la valeur maximale.

Dans une autre réalisation, on ne considère un pic secondaire que lorsque la valeur de la fonction d'intercorrélation est descendue, entre le pic principal et le pic secondaire considéré, sous un certain seuil relatif à la valeur maximale. Ce seuil peut être zéro, auquel cas le critère considéré est le changement de signe de la fonction d'intercorrélation entre deux pics retenus. Cependant, tout autre algorithme de détection de pic tel que ceux décrits dans " PEAK SEARCHING ALGORITHMS and APPLICATIONS", D. Ventzas, N. Petrellis, SIPA 2011, peut être adapté pour déterminer le pic secondaire, notamment les algorithmes de recherche de pic dans le domaine temporel.

Les valeurs des pics principaux et secondaires (déjà calculées lors de l'étape d'intercorrélation) sont données par :

$$V_{princ_i} = C_i(\tilde{\tau}_{princ_i}) \tag{34}$$

$$V_{sec_i} = C_i(\tilde{\tau}_{sec_i}) \tag{35}$$

On exprime donc *Ratio_i* comme le rapport suivant :

$$Ratio_i = \frac{V_{princ_i}}{V_{sec_i}} \tag{44}$$

Il est à noter que dans le cas de la présence d'un signal important dans le bloc de référence (traduisant la présence d'une source active), ce signal devrait logiquement être également présent dans la zone d'observation. Par contre, s'il y a absence de signal (ou faible bruit) dans le bloc de référence (traduisant l'absence de source active), on peut s'interroger sur le niveau de confiance accordé à l'estimateur du retard. Cet aspect sera abordé plus loin, en relation avec la notion d'indice de confiance associé aux paramètres estimés.

On exprime $E_{ref_i}$ de la manière suivante :

$$E_{ref_i} = \|BRef_i\|_{\tilde{\tau}_{princ_i}} \tag{45}$$

Avantageusement, la fonction *ICLR_i* s'exprime donc de la manière suivante:

$$ICLR_i = \frac{V_{princ_i}}{V_{sec_i}} \cdot E_{ref_i} \tag{46}$$

On notera que les signaux sonores de nature périodique s'accompagnent certes, localement, d'une ambiguïté sur la détermination du retard. Néanmoins ils ont l'avantage d'être potentiellement plus fréquents que des signaux de nature transitoire et il est intéressant de pouvoir les exploiter pour mettre à jour plus régulièrement les paramètres estimés. Le lissage temporel de l'intercorrélation précédemment décrit permet de réduire cette ambiguïté mais au prix d'une moindre réactivité aux situations où le retard effectif change (lorsque la source sonore se déplace). Selon une variante de réalisation, l'invention exploite les signaux relativement périodiques dès lors que la valeur maximale d'intercorrélation est suffisante. Dans ces conditions, cette variante repose sur deux principes :

- s'il y a une erreur d'estimation du retard et donc de resynchronisation de l'appoint par rapport au principal, ce n'est pas dommageable dans la mesure où elle se fait avec un nombre entier de périodes du signal, et l'on évite ainsi les phénomènes de filtrage en peigne
- on peut lever l'ambiguïté sur le retard en fonction des estimations passées :

    o soit on avait déjà une estimation jugée fiable dans un passé récent et dès lors, il est raisonnable de considérer que le nouveau retard correspond, parmi les principaux pics d'intercorrélation, à celui qui s'approche le plus de l'ancien, calculé sur une intercorrélation lissée ou pas

    o soit la période du signal évolue dans le temps, auquel cas le « bon » retard est celui qui correspond au pic d'intercorrélation qui reste le plus stable temporellement, les autres s'écartant ou se rapprochant les uns des autres et autour de cette valeur stable, proportionnellement à la période du signal.

Dans les cas où d'une trame à la suivante, il y a un saut dans la valeur du retard qui correspond à un nombre entier de périodes, l'invention préconise de calculer deux versions retardées (avec l'ancienne et la nouvelle valeurs) et d'en effectuer un fondu-enchaîné sur une période de transition qui peut coïncider avec la trame.

Bien sûr, on peut imaginer introduire d'autres critères permettant d'améliorer la robustesse ou la précision de l'indice de confiance.

Au cours de l'étape E6, on calcule l'indice de confiance local relatif à la position du signal de référence dans le référentiel du signal d'observation.

Selon une réalisation particulière, le calcul de l'indice ICLP est basé sur la valeur maximale d'intercorrélation (associée au retard $\tilde{\tau}_i$) et sur le rapport entre l'énergie du signal du microphone d'appoint ($BRef_i$) et celui du microphone principal ($BObs_i$) :

$$E_{ref/obs_i} = \frac{\|bRef_i\|}{\|bObs_i\|_{\tilde{\tau}_i}} \tag{47}$$

$$ICLP_i = ICLG_i = V_{princ_i} \cdot E_{ref/obs_i} \tag{48}$$

Au cours de l'étape E7, la même valeur est affectée à l'indice local de confiance relatif au niveau de gain.

On note que selon ce mode de réalisation particulier, les indices ICLP et ICLG possèdent la même valeur, mais on peut imaginer d'autres critères spécifiques à la position ou au gain. Par exemple, on peut ajouter un critère de caractère diffus de la source (révélateur de la présence d'une réverbération qui pourrait venir perturber l'estimation de la position), par exemple sous la forme d'un coefficient pondérateur de valeur inférieure à un, qui viendrait diminuer la valeur de l'indice de confiance associée à la position.

$$ICLP_i = \beta_{azi/ele} \cdot V_{princ_i} \cdot E_{ref/obs_i} \tag{49}$$

où $\beta_{azi}$ dépend des composantes X et Y du signal principal et $\beta_{ele}$ dépend de Z.

Dans la description donnée, l'indice ICLP représente un indice de confiance valable à la fois pour les angles d'azimut et d'élévation. On peut néanmoins, dans un autre mode de réalisation, tirer profit d'indices ICLPazi et ICLPele indépendants qui pourront fournir des valeurs différentes à exploiter en conséquence dans les modules de calcul d'Indice de Confiance Globaux suivants (par exemple mettre à jour le paramètre d'azimut tout en réutilisant le paramètre d'élévation stocké pour la trame précédente).

En E8, on teste si le bloc de référence courant $BRef_i$ est le dernier de la trame. Si c'est le cas , on passe aux étapes suivantes. Sinon, on incrémente la valeur de l'indice i et on répète les étapes précédentes sur le bloc de référence suivant de la trame q.

Au cours des étapes E9, E10 et E11, on calcule maintenant des indices globaux de confiance ICG pour la trame courante q. Ils sont obtenus à partir des indices de confiance locaux calculés pour les blocs de référence de la trame courante q et associés aux valeurs de paramètres estimées pour ces blocs et des valeurs d'indices de confiances globaux calculés pour la trame précédente q-1, associées aux valeurs de paramètres estimées pour ces trames.

Avantageusement, on combine les valeurs des indices de confiance locaux et globaux de la façon suivante :

$$ICGX_q = f(ICLX_1, ICLX_2, \ldots, ICLX_I, ICGX_{q-1}) \tag{50}$$

où X représente R, P ou G, f est une fonction de combinaison, $ICG_{q-1}$ est l'indice de confiance global de la trame précédente q-1 et I correspond au nombre de blocs de référence dans la trame courante.

Pour q=1, on initialise l'indice de confiance à une valeur minimale, par exemple zéro.

Selon un mode de réalisation particulier, la fonction f réalise simplement une comparaison des valeurs des toutes les valeurs d'indices $ICLX_i$ avec i = 1 à I, calculées pour les blocs de de la trame q et $ICGX_{q-1}$, la valeur la plus élevée étant retenue et attribuée à $ICGX_q$.

Cela permet de mettre à jour, pour la trame courante q, la valeur de l'indice de confiance et son paramètre associé ($ICLX_q$, $X_q$), lorsque la valeur de l'indice de confiance calculée pour un des blocs de référence courant est plus élevée que la valeur de l'indice de confiance de la trame précédente q-1 stockée en mémoire, ou inversement de conserver l'indice de confiance et son paramètre associé calculé pour la trame précédente tant que les indices de confiance de tous les blocs de référence calculés pour la trame courante n'ont pas permis de fournir une valeur de confiance suffisante.

Dans un mode de réalisation avantageux, une seule valeur ICLX peut être calculée en comparant au fur et à mesure les valeurs $ICGX_i$ associés à chacun des blocs de référence. Il s'ensuit que l'on combine les valeurs des indices de confiance locaux et globaux de la façon suivante :

$$ICGX_q = f'(ICLX, ICGX_{q-1}) \qquad (51)$$

où la fonction f réalise simplement une comparaison de 2 valeurs : $ICGX$ et $ICGX_{q-1}$, la valeur la plus élevée étant retenue et attribuée à $ICGX_q$.

Ce mode de réalisation présente l'avantage de limiter la quantité d'informations stockées.

L'étape E9 calcule donc la valeur d'un indice global de confiance relatif à l'estimation du retard ICGR pour la trame de référence $TRefq$ selon l'équation (43) ou (43') et lui associe la valeur de retard correspondant à l'indice de confiance local ou précédent le plus élevé. Par exemple, si c'est le bloc de référence $BRef_i$ qui a obtenu la valeur d'indice local la plus élevée de la trame q et si cette valeur est aussi supérieure à l'indice obtenu pour la trame q-1, la valeur de retard extraite est $\tilde{\tau}i$.

L'étape E10 calcule donc la valeur d'un indice global de confiance relatif à l'estimation de la position ICGP pour la trame de référence $TRefq$ selon l'équation (43) ou (43') et lui associe la ou les valeurs de position angulaire $\tilde{\theta}_q$, $\tilde{\varphi}_q$ correspondant à l'indice de confiance local ou précédent le plus élevé

L'étape E11 calcule donc la valeur d'un indice global de confiance relatif à l'estimation du gain ICGR pour la trame de référence $TRefq$ selon l'équation (43) ou (43') et lui associe la valeur de gain $G_q$ correspondant à l'indice de confiance local ou précédent le plus élevé°.

Dans un autre mode de réalisation, la fonction f minimise une fonction de coût qui prend par exemple en compte une combinaison de la distribution des valeurs des paramètres et des indices de confiance associés.

Selon une variante, un coefficient d'oubli est appliqué à $ICGX_{q-1}$ afin de ne pas rester bloqué sur une valeur maximale. L'ajout de cette possibilité d'oubli est particulièrement utile le micro d'appoint se déplace au cours du temps. En effet dans ce cas, la valeur du paramètre estimée pour l'une des trames précédentes n'est pas forcément plus fiable que la valeur courante.

En E12, les valeurs des paramètres estimés sont déterminés en fonction des indices globaux calculés par trame q, les valeurs associés aux valeurs maximales d'indices de confiance étant choisies. Ceci permet d'obtenir, en sortie les valeurs estimées des paramètres de retard f, de position angulaire $\tilde{\theta}_n$, $\tilde{\varphi}_n$ et de gain $\tilde{g}_{m,n,W}$ les plus fiables pour la trame courante q.

Le principe de sélection des paramètres estimés qui vient d'être décrit est donné à titre d'exemple. Il présente l'avantage d'être relativement peu coûteux en termes de calcul.

Selon un autre mode de réalisation de l'invention et basé sensiblement la même architecture globale, on remplacer chaque indice de confiance global associé à une trame donnée par un vecteur formé d'au moins un ou plusieurs indicateurs, et l'on déduira dynamiquement pour chaque trame, à partir du vecteur associé à la trame courante et des vecteurs associés aux trames voisines (en général précédentes), un état caractérisé par les paramètres de mixage estimés (retard, angles, gain).

Les indicateurs du vecteur comprendront par exemple : la valeur maximale d'intercorrélation et le retard associé, les retards et valeurs associées aux pics secondaires d'intercorrélation, les niveaux d'énergie des signaux d'appoint et principal.

Par exemple, l'état courant d'une trame sera déduit à partir des différents vecteurs d'indicateurs (courant et passés) en utilisant des modèles de Markov cachés (HMM pour « Hidden Markov Model », en anglais) ou de filtres de Kalman. Une phase d'apprentissage pourra être menée préalablement, par exemple à l'occasion de répétitions de l'enregistrement) ou au fil de l'eau, le modèle s'améliorant peu à peu.

Un avantage de cette alternative plus élaborée et d'être plus robuste.

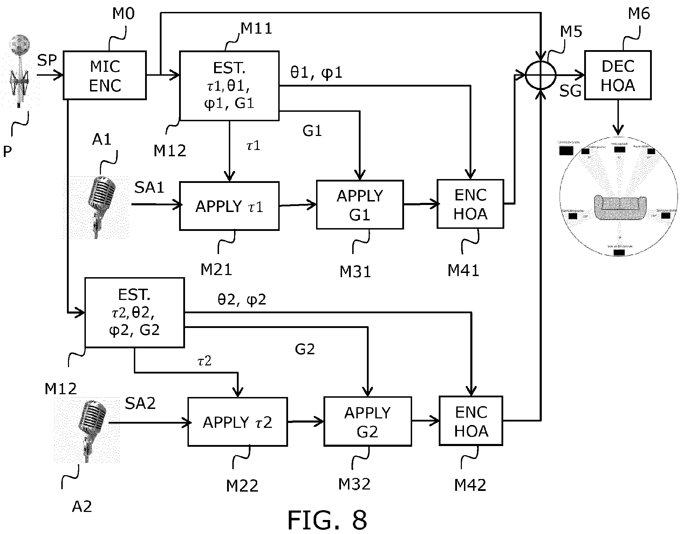

En relation avec la Figure **8**, on considère maintenant un microphone principal P et deux microphones d'appoint A1, A2, agencés de manière à capter une scène sonore et on décrit les étapes d'un procédé de mixage de ces signaux selon un mode de réalisation de l'invention.

Au cours d'une étape M0, on encode le signal audio capté par les capsules du microphone principal au format HOA. On obtient un signal SP à 4 composantes, W, X, et Z comme précédemment décrit.

Au cours d'une étape M11, on estime les paramètres de mixage du signal SA1 capté par le premier microphone d'appoint avec le signal SP en mettant en oeuvre le procédé d'estimation selon l'invention qui vient d'être décrit. On obtient des valeurs estimées de retard $\tilde{\tau}1$, position angulaire $\tilde{\theta}_1$, $\tilde{\varphi}_1$ et de gain $G_1$. La valeur de retard obtenue est appliquée au signal SA1 au cours d'une étape M21. De cette manière, on synchronise temporellement le signal principal SP et le signal d'appoint SA1.

Pour chaque appoint, l'invention prévoit deux modes de resynchronisation, selon la variation dans le temps du retard estimé et/ou certains indices obtenus lors de cette estimation. Lorsque le retard estimé est stable ou évolue continûment de trame en trame, il est justifié d'opérer une lecture à retard glissant, c'est-à-dire de déterminer pour chaque échantillon sonore à traiter un retard obtenu par interpolation temporelle entre les retards estimés pour la trame précédente et la trame courante et de déterminer l'échantillon sonore résultant par interpolation du signal au voisinage du retard interpolé. L'interpolation peut être réalisée selon différentes techniques, connues de l'homme de métier, telle que par exemple des techniques d'interpolations linéaires, polynomiales ou par splines telles que décrites dans le document de R.W. Schafer et al, intitulé « A Digital Signal Processing Approach to Interpolation », publié dans les Proceedings IEEE, vol. 61, no. 6, pp. 692 - 702, en juin 1973..

Il se peut à l'inverse que d'une trame à l'autre, le retard estimé fasse un saut significatif. Cela peut arriver par exemple lorsque sur au moins l'une des trames le retard est estimé avec une erreur correspondant à un nombre entier de périodes du signal. Cela peut se produire aussi lorsque le signal d'appoint est resté « silencieux », c'est-à-dire à un niveau sonore inférieur à un seuil jugé significatif, sur une période pendant laquelle la source sonore principalement captée par l'appoint s'est déplacée tout en étant muette. Pendant cette période, le retard n'a alors pas été mis à jour, jusqu'au moment où la source est redevenue sonore. Dans ce cas, le retard mis à jour peut prendre une valeur nettement différente de celle de l'estimation précédente. Ou encore, il peut s'agir d'une nouvelle source captée de façon prédominante par le même appoint. Dans ces cas, le principe d'un retard glissant sur la période de transition n'est pas approprié, car il pourrait créer un effet Doppler artificiel, c'est-à-dire une distorsion fréquentielle momentanée. L'invention prévoit alors, sur une période de transition, la production intermédiaire de deux versions retardées du signal par une lecture parallèle dans le signal d'appoint avec deux retards simultanés (deux pointeurs de lecture), pour finalement produire un signal par fondu-enchaîné (pour « cross-fade », en anglais) des deux versions retardées du signal. De cette façon, l'intégrité fréquentielle du signal est préservée.

Au cours d'une étape M31, le signal d'appoint SA1 retardé est ajusté en niveau par application du gain estimé $G_1$.

En M41, il est encodé spatialement au format HOA à l'aide des paramètres de position angulaire $\tilde{\theta}_1$, $\tilde{\varphi}_1$ On comprend qu'au cours de cette étape, le signal d'appoint SA1 est spatialisé dans le référentiel du microphone principal. L'encodage spatial HOA, dans sa modalité la plus simple, repose sur l'utilisation de fonctions harmoniques sphériques, qui prennent en entrée lesdits paramètres de position angulaire, produisant des gains d'amplitude à appliquer au signal d'appoint pour obtenir les signaux HOA associés. Cet encodage angulaire peut être complété pour traduire toute autre caractéristique spatiale comme le champ proche, tel que décrit par exemple dans le document intitulé "Further Study of Sound Field Coding with Higher Order Ambisonics", par J. Daniel et S. Moreau, publié dans les proceedings de la conférence AES 116th Convention, en 2004. On obtient donc une représentation compatible avec celle captée par le microphone principal, c'est-à-dire, pour une représentation 3D, au minimum un ensemble de 4 signaux $W_{SA1}$, $X_{SA1}$, $Y_{SA1}$ et $Z_{SA1}$ correspondant à l'ordre 1. Avantageusement, il est naturellement envisageable d'encoder le signal d'appoint avec une résolution spatiale (autrement dit un ordre ambisonique) supérieure à celle captée par le microphone principal, ceci afin d'améliorer la définition non seulement audio, mais spatiale, des sources sonores.

De façon analogue, on estime en M12 les paramètres de mixage du signal SA2 capté par le deuxième microphone d'appoint avec le signal SP en mettant en oeuvre le procédé d'estimation selon l'invention qui vient d'être décrit. On obtient des valeurs estimées de retard $\tilde{\tau}2$, position angulaire $\tilde{\theta}_{21}$, $\tilde{\varphi}_{21}$ et $G_2$ La valeur de retard obtenue est appliquée au signal SA2 au cours d'une étape M22. De cette manière, on synchronise temporellement le signal principal et le signal d'appoint.

Au cours d'une étape M32, le signal d'appoint SA2 retardé est ajusté en niveau par application du gain estimé.

En M42, il est encodé au format HOA à l'aide des paramètres de position angulaire $\tilde{\theta}_2$, $\tilde{\varphi}_2$, On comprend qu'au cours de cette étape, le signal d'appoint retardé SA2 est spatialisé dans le référentiel du microphone principal, de façon cohérente avec « l'image » de la scène captée par le microphone principal. On obtient donc un signal à 4 composantes, $W_{SA2}$, $X_{SA2}$, $Y_{SA2}$ et $Z_{SA2}$.

Au cours d'une étape M5, on fait la somme des signaux HOA, composante par composante pour obtenir un signal global SG dont les 4 composantes intègrent, sans artefact, les signaux captés par les différents microphones.

Avantageusement, on peut ensuite décoder en M6 le signal global SG obtenu pour restituer la scène sonore de façon spatialisée sur plusieurs haut-parleurs.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

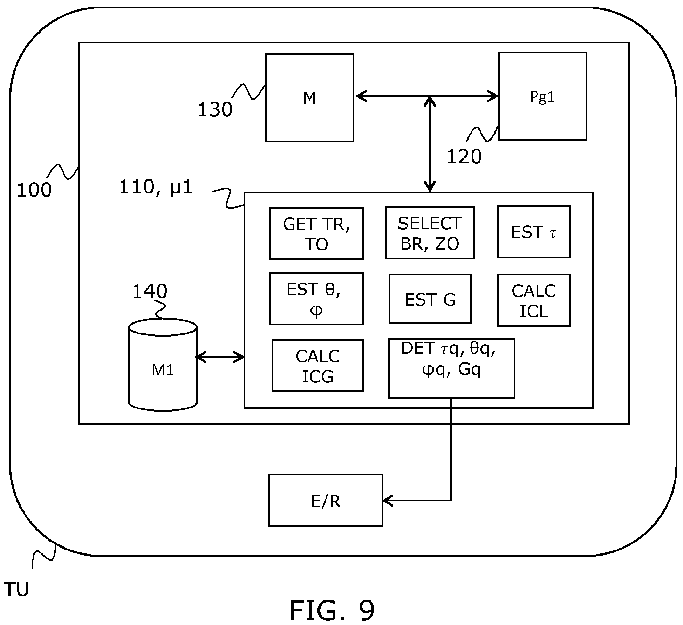

En relation avec la Figure **9** on présente maintenant un exemple de structure simplifiée d'un dispositif 100 d'estimation de paramètres de mixage selon l'invention. Le dispositif 100 met en oeuvre le procédé d'estimation de paramètres de mixage selon l'invention qui vient d'être décrit en relation avec la Figure **5**.

Par exemple, le dispositif 100 comprend une unité de traitement 110, équipée d'un processeur $\mu1$, et pilotée par un programme d'ordinateur Pg1 120, stocké dans une mémoire 130 et mettant en oeuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans cet exemple de réalisation de l'invention, le dispositif 100 comprend au moins une unité GET d'obtention d'une trame d'un signal d'appoint ou signal de référence et d'une trame du signal principal ou signal d'observation, une unité SELECT de sélection d'un bloc de référence dans le signal de référence et d'une zone d'observation dans la trame d'observation, une unité d'estimation EST $\tilde{\tau}$ d'un retard entre le bloc de référence et un bloc d'observation de la trame d'observation, une unité EST P d'estimation d'une position angulaire du bloc de référence dans un référentiel du signal d'observation, une unité EST G d'estimation d'un niveau de gain du bloc de référence par rapport à un bloc d'observation, une unité CALC ICL de calcul d'indices de confiance locaux associés à chacun des paramètres estimés, à partir de l'estimation locale pour le bloc de référence courant et de l'estimation pour la trame précédente, une unité CALC ICG de calcul d'indices de confiance globaux associés aux paramètre estimés pour la trame de référence à partir de l'estimation locale pour le bloc de référence courant et de l'estimation pour la trame précédente et une unité DET de détermination des valeurs des paramètres estimés pour la trame courant en fonction des indices de confiance globaux obtenus. Les unités de sélection, estimation, calcul d'indices de confiances sont aptes à être mises en oeuvre pour chaque bloc de référence de la trame de référence.

Le dispositif 100 comprend en outre une unité M1 de stockage des paramètres estimés pour chacune des trames de référence q du signal d'appoint.

Ces unités sont pilotées par le processeur $\mu1$ de l'unité de traitement 110.

De façon avantageuse, le dispositif 100 peut être intégré à un terminal d'utilisateur TU. Il est alors agencé pour coopérer au moins avec les modules suivants du terminal TU :

- une mémoire apte à stocker les valeurs de paramètres estimés pour les trames q;
- un module E/R d'émission/réception de données, par l'intermédiaire duquel il transmet par l'intermédiaire d'un réseau de télécommunications les paramètres de mixage estimés à un terminal d'utilisateur TU' qui les lui a commandés.

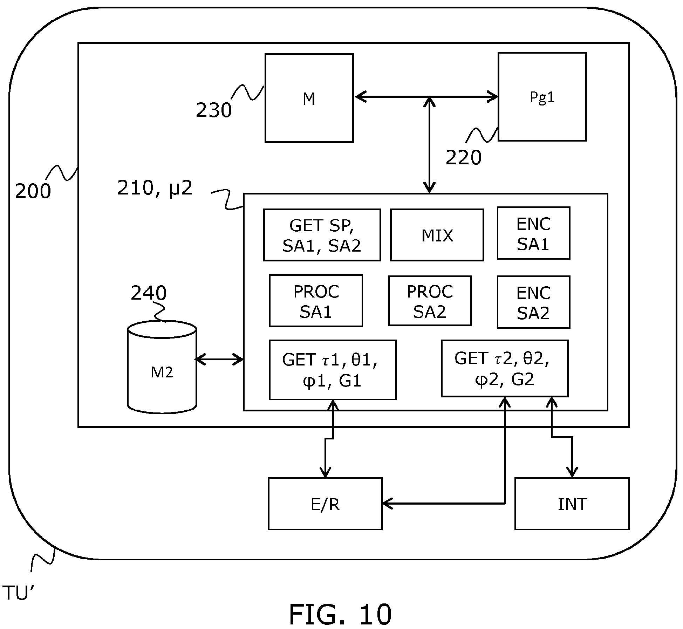

En relation avec la Figure **10** on présente maintenant un exemple de structure simplifiée d'un dispositif 200 de mixage de signaux audio représentatifs d'une même scène sonore et captés par un microphone principal et un ou plusieurs microphones d'appoint selon l'invention. Le dispositif 200 met en oeuvre le procédé de mixage selon l'invention qui vient d'être décrit en relation avec la Figure **7**.

Par exemple, le dispositif 200 comprend une unité de traitement 210, équipée d'un processeur $\mu2$, et pilotée par un programme d'ordinateur Pg2 220, stocké dans une mémoire 230 et mettant en oeuvre le procédé de selon l'invention.

A l'initialisation, les instructions de code du programme d'ordinateur $Pg_2$ 220 sont par exemple chargées dans une mémoire RAM avant d'être exécutées par le processeur de l'unité de traitement 210. Le processeur de l'unité de traitement 210 met en oeuvre les étapes du procédé décrit précédemment, selon les instructions du programme d'ordinateur 220.

Dans cet exemple de réalisation de l'invention, le dispositif 200 comprend au moins une unité ENC SP d'encodage d'une trame du signal principal ou signal d'observation au format HOA, une ou plusieurs unités GET $\tilde{\tau}_1, \tilde{\theta}_{n1}, \tilde{\varphi}_1, \tilde{g}_1$, GET $\tilde{\tau}_2, \tilde{\theta}_2, \tilde{\varphi}_2, \tilde{g}_2$ des paramètres de mixage des signaux d'appoint SA1, SA2, une ou plusieurs unités de traitement PROC SA1, PROC SA2 des trames de références pour leur appliquer le retard et le gain estimés, une ou plusieurs unités d'encodage ENC SA1, ENC SA2 d'encodage spatial des trames des signaux de référence issues des microphones d'appoint à l'aide du retard estimé entre le bloc de référence et la trame d'observation, une unité MIX de mixage des signaux encodés principaux et d'appoint apte à fournir un signal encodé global SG et une unité DEC SG de décodage de signal global en vue d'une restitution spatialisée de la scène sonore sur une pluralité de haut-parleurs.

Ces unités sont pilotées par le processeur μ2 de l'unité de traitement 210.

Dans un mode de réalisation particulier, il est laissé à l'ingénieur du son la possibilité de contrôler et éventuellement d'ajuster les paramètres de mixage estimés par l'invention. Selon un premier aspect, il peut moduler la valeur des paramètres de de retard, de gain, de positionnement spatial HOA en amont des unités PROC des signaux proprement dit c'est-à-dire directement en sortie de l'unité d'estimation des paramètres GET, soit plus en aval, c'est-à-dire au niveau des unités de traitement PROC proprement dites, par exemple par l'intermédiaire d'une interface manuelle de réglage des paramètres INT.

Selon un premier aspect, les unités GET mettent en oeuvre le procédé d'estimation selon l'invention qui vient d'être décrit. Avantageusement, elles comprennent un dispositif d'estimation 100 selon l'invention. Dans ce cas, un ou plusieurs dispositifs 100 sont intégrés au dispositif de mixage 200 selon l'invention.

Selon une première variante, le programme d'ordinateur Pg1 120 est stocké dans la mémoire 230. A l'initialisation, les instructions de code du programme d'ordinateur $Pg_1$ 120 sont par exemple chargées dans une mémoire RAM avant d'être exécutées par le processeur de l'unité de traitement 110.Selon une deuxième variante, le dispositif 200 est connecté à un ou plusieurs dispositifs d'estimation 100 externes, auxquels il commande l'estimation de paramètres de mixage.

De façon avantageuse, le dispositif 200 peut être intégré à un terminal d'utilisateur TU'. Il est alors agencé pour coopérer au moins avec les modules suivants du terminal TU' :

- une mémoire apte à stocker les valeurs de paramètres estimés et/ou les signaux principaux et d'appoint encodés ;

- un module E/R d'émission/réception de données, par l'intermédiaire duquel il commande les paramètres de mixage estimés et/ou les signaux encodés au terminal d'utilisateur TU comprenant le dispositif 100 par l'intermédiaire d'un réseau de télécommunications ;

- une interface utilisateur INT par l'intermédiaire de laquelle un utilisateur peut ajuster les valeurs de paramètres estimés.

Plusieurs applications de l'invention sont envisagées, aussi bien dans le domaine professionnel que grand public.

Dans le domaine professionnel, l'invention peut être utilisée pour mettre en oeuvre une assistance automatique pendant le mixage de contenus multimédias. Elle s'applique à d'autres contextes que celui déjà décrit d'une prise de son musicale avec utilisation de microphones ambisoniques aux ordres supérieurs (HOA) et de microphones d'appoints qui peuvent être placés à côté d'instruments musicaux.

En particulier, le théâtre offre différentes opportunités d'utilisation de la technologie HOA. Pendant la prise de son il y a plusieurs solutions pour placer le microphone principal et les microphones d'appoint. Par exemple, il est possible d'enregistrer un artiste en mouvement avec un microphone d'appoint mais il serait également envisageable de placer les microphones d'appoint au bord de la scène pour localiser sa position et son déplacement.

Le cinéma ouvre de nouvelles perspectives pour l'utilisation de HOA en tant que microphone principal en conjonction avec des microphones d'appoint. Le microphone HOA peut également trouver sa place en tant que microphone d'ambiance.

La technologie ambisonique peut aussi servir pour l'enregistrement d'émissions télévisuelles et radiophoniques. Dans ce cas-là, un pré-mixage automatique tel que celui procuré par l'invention est particulièrement avantageux, car la plupart des émissions se déroulent en temps réel, ce qui rend toute post-production impossible.

Dans le domaine grand public, la technologie HOA ouvre également des perspectives :

- HOA peut servir durant la répétition des groupes musicaux. Le microphone principal HOA capte la globalité de la scène sonore et les musiciens utilisent par exemple utiliser leurs téléphones portables en tant que microphones d'appoint. L'invention procure automatiquement une version de répétition pré-mixée ce qui permet aux musiciens d'écouter l'ensemble musical et de le faire évoluer répétition après répétition ;

- Au cours d'une réunion immersive, par exemple de travail ou familiale, les téléphones portables sont utilisés comme microphones d'appoint et le microphone principal est posé soit au milieu de la table si on parle d'une réunion de travail soit suspendu en hauteur pendant une réunion familiale. La solution de pré-mixage selon l'invention est de combiner les signaux captés par tous les microphones d'appoint et de les mixer avec le microphone principal pour restituer une image sonore complète.

Il va de soi que les modes de réalisation qui ont été décrits ci-dessus ont été donnés à titre purement indicatif et nullement limitatif, qu'ils peuvent être combinés, et que de nombreuses modifications peuvent être facilement apportées par l'homme de l'art sans pour autant sortir du cadre de l'invention.

**Revendications**

1. Procédé de traitement de données pour l'estimation de paramètres de mixage d'au moins un signal audio d'appoint capté par un dispositif de prise de son, dit microphone d'appoint, agencé à proximité d'une source parmi une pluralité de sources acoustiques constituant une scène sonore, et un signal audio principal capté par un dispositif de prise de son, agencé pour capter ladite pluralité de sources acoustiques de la scène sonore, ledit signal audio principal étant encodé dans un format dit « ambisonique », comprenant au moins une composante (W) omnidirectionnelle et trois composantes (X, Y, Z) bidirectionnelles projetées selon des axes orthogonaux d'un référentiel du microphone principal, ledit procédé étant **caractérisé en ce qu'**il comprend les étapes suivantes , mises en oeuvre pour une trame du signal audio principal et une trame d'undit signal d'appoint, une trame comprenant au moins un bloc de N échantillons:

   - Estimation (E2) d'un retard entre la composante omnidirectionnelle de la trame du signal audio principal et la trame dudit signal d'appoint, à partir d'au moins un bloc de N échantillons d'une des deux trames, dit bloc de référence ($BRef_i$), associé à un instant d'acquisition prédéterminé (ti), et d'une zone d'observation ($ZObs_i$) de l'autre trame, dite zone d'observation, comprenant au moins un bloc de N échantillons et formée dans un voisinage de l'instant d'acquisition, par maximisation d'une mesure de similarité entre le bloc de référence et un bloc de la zone d'observation, dit bloc d'observation ($BObs_i$), décalé temporellement du retard ($\tau$) par rapport au bloc de référence; et
   - Estimation (E3) d'au moins une position angulaire de la source captée par ledit microphone d'appoint dans un référentiel du microphone principal par calcul d'un rapport entre un premier produit scalaire d'un bloc du signal audio d'appoint associé à l'instant d'acquisition prédéterminé et d'une première composante du bloc du signal audio principal décalé temporellement du retard ($\tau$) estimé et un deuxième produit scalaire du même bloc du signal audio d'appoint et du bloc d'une deuxième composante du signal audio principal décalé temporellement du retard ($\tau$) estimé.

2. Procédé de traitement de données pour l'estimation de paramètres de mixage selon la revendication **1**, **caractérisé en ce que**, le bloc de référence ($BRef_i$) étant choisi dans le signal audio d'appoint, l'étape d'estimation du retard comprend un calcul d'une mesure de similarité au moins pour le bloc de référence ($BRef_i$), à partir d'une fonction d'intercorrélation normalisée (Ci) qui s'exprime de la façon suivante :

$$C_i(\tau) = \frac{\langle a_n | W \rangle_{-\tau}}{\|a_n\| \cdot \|W\|_{-\tau}}$$

   avec W(t) composante omnidirectionnelle du signal ambisonique, $a_n(t)$ signal d'appoint, $\langle x|y \rangle_{-\tau} = {}_0\langle x|y \rangle_{-\tau}$ le produit scalaire entre les deux signaux décalés temporellement de -$\tau$, de support fini, dans la zone d'observation associée au bloc de référence ($BRef_i$), et $\|x\|_\tau = \sqrt{{}_\tau\langle x|x \rangle_\tau}$, la norme d'un signal discret à support fini ;
   et **en ce que** le retard ($\tau$) est estimé à partir de la valeur maximale de la mesure de similarité calculée :

$$\tilde{\tau} = \underset{\tau}{\text{Argmax}}\, C_i(\tau)$$

3. Procédé de traitement de données pour l'estimation de paramètres de mixage selon la revendication **2 caractérisé en ce que** l'étape d'estimation du retard comprend en outre un lissage temporel de la mesure de similarité calculée pour le bloc de référence courant ($BRef_i$) prenant en compte la mesure de similarité calculée pour au moins un bloc de référence précédent ($BRef_{i-1}$).

4. Procédé de traitement de données pour l'estimation de paramètres de mixage selon l'une des revendications **1** à **3**, **caractérisé en ce que** l'estimation d'une position angulaire de la source captée comprend l'estimation d'une position angulaire de la source captée comprend l'estimation d'un angle d'azimut ($\tilde{\theta}_n$) à partir d'un rapport entre le produit scalaire du signal du bloc de référence associé à l'instant d'acquisition prédéterminé avec le bloc de la composante *Y* du signal audio principal décalé du retard estimé et le produit scalaire du signal du bloc de référence associé à l'instant d'acquisition prédéterminé avec le bloc de la composante *X* du signal audio principal décalé du retard estimé.

5. Procédé de traitement de données pour l'estimation de paramètres de mixage selon la revendication **4**, **caractérisé en ce que** l'angle d'azimut est estimé à partir de l'équation suivante :

$$\tilde{\theta}_n = \text{atan2}(\langle a_n | Y \rangle_{-\tilde{\tau}}, \langle a_n | X \rangle_{-\tilde{\tau}})$$

6. Procédé de traitement de données pour l'estimation de paramètres de mixage selon l'une des revendications **1 à 5**, **caractérisé en ce que** l'estimation d'une position angulaire comprend l'estimation d'un angle d'élévation à partir d'un rapport entre le produit scalaire du bloc de référence du signal audio d'appoint associé à l'instant d'acquisition avec le bloc de la composante Z du signal audio principal décalé du retard ($\tau$) estimé et le produit scalaire du bloc du signal audio d'appoint associé à l'instant d'acquisition avec le bloc de la composante omnidirectionnelle du signal audio principal décalé du retard ($\tau$) estimé.

7. Procédé de traitement de données pour l'estimation de paramètres de mixage selon la revendication **6**, **caractérisé en ce que** l'angle d'élévation ($\tilde{\varphi}_n$) est estimé à partir de l'équation suivante :

$$\tilde{\varphi}_n = \arcsin\left(\frac{\langle a_n | Z \rangle_{-\tilde{\tau}}}{\eta \cdot \langle a_n | W \rangle_{-\tilde{\tau}}}\right)$$

8. Procédé de traitement de données pour l'estimation de paramètres de mixage selon l'une des revendications précédentes, **caractérisé en ce qu'**il comprend en outre une estimation d'un paramètre de gain à partir d'un rapport entre le produit scalaire du bloc du signal audio d'appoint et du bloc de la composante omnidirectionnelle du signal audio principal décalé du retard ($\tau$) estimé et la norme du bloc du signal audio d'appoint.

9. Procédé de traitement de données pour l'estimation de paramètres de mixage selon la revendication **8**, **caractérisé en ce que** le paramètre de gain est estimé à partir de l'équation suivante :

$$\tilde{g}_{m,n,W} = \frac{\langle a_n | W \rangle_{-\tilde{\tau}}}{\|a_n\|^2}$$

10. Procédé de traitement de données pour l'estimation de paramètres de mixage selon l'une des revendications **2 à 9**, **caractérisé en ce qu'**il comprend une étape (E5, E6, E7) de calcul d'un indice local de confiance (ICLR, ICLP, ICLG) associé à un paramètre de mixage estimé pour le bloc de référence par analyse de la fonction d'intercorrélation normalisée calculée entre la composante omnidirectionnelle du signal audio principal et le signal audio d'appoint et d'une énergie du signal du bloc de référence.

11. Procédé de traitement de données pour l'estimation de paramètres de mixage selon la revendication **10**, **caractérisé en ce que** l'indice local de confiance (*ICLR_i*) associé au paramètre de retard estimé est basé sur un rapport entre des valeurs de pics principal et secondaire de la fonction d'intercorrélation multiplié par l'énergie du bloc de référence (*BRef_i*).

12. Procédé de traitement de données pour l'estimation de paramètres de mixage selon la revendication **10**, **caractérisé en ce que** l'indice local de confiance (*ICLP_i*) associé au paramètre de position angulaire est basé sur la valeur maximale d'intercorrélation associée au retard ($\tilde{\tau}_i$) estimé et sur un rapport entre l'énergie du bloc de référence (*BRef_i*) et celle du bloc d'observation (*BObs_i*):

13. Procédé de traitement de données pour l'estimation de paramètres de mixage selon l'une des revendications précédentes, **caractérisé en ce que** les étapes (E2) d'estimation de retard et (E3) de position sont répétées (E8) pour la pluralité de blocs de référence (*BRef_i*) de la trame (*TRef_q*) et **en ce que** le procédé comprend en outre des étapes (E9, E10, E11) de calcul d'indices de confiance globaux associés aux paramètres de mixage estimés pour la trame de référence, à partir des indices locaux calculés pour un bloc de référence de ladite trame et une étape (E12) de détermination de valeurs de paramètres de mixages pour une pluralité de trames en fonction des indices de confiance globaux calculés.

14. Dispositif (100) de traitement de données pour l'estimation de paramètres de mixage d'au moins un signal audio d'appoint capté par un dispositif de prise de son, dit microphone d'appoint ($a_n$), agencé à proximité d'une source parmi une pluralité de sources acoustiques constituant une scène sonore (Sc), et un signal audio principal (SP) capté par un dispositif de prise de son ambisonique (P), agencé pour capter ladite pluralité de sources acoustiques de la scène sonore, ledit signal audio principal étant encodé dans un format dit « ambisonique », comprenant au moins une composante (W) omnidirectionnelle et trois composantes (X, Y, Z) bidirectionnelles projetées selon des axes orthogonaux d'un référentiel du microphone principal, ledit dispositif étant **caractérisé en ce qu'**il comprend les unités suivantes , aptes à être mises en oeuvre pour une trame du signal audio principal et une trame d'undit signal d'appoint, une trame comprenant au moins un bloc de $N$ échantillons:

- estimation (EST $\tau$) d'un retard ($\tau$) entre la composante omnidirectionnelle de la trame du signal audio principal et la trame dudit signal d'appoint, à partir d'un bloc de $N$ échantillons d'une trame d'un des deux signaux audio, dit bloc de référence, associé à un instant d'acquisition prédéterminé, et d'une zone d'observation de la trame de l'autre signal audio, dite, zone d'observation, comprenant au moins un bloc de $N$ échantillons et formée dans un voisinage de l'instant d'acquisition, par maximisation d'une mesure de similarité entre le u bloc de référence et un bloc de la zone d'observation, dit bloc d'observation, décalé temporellement du retard ($\tau$) par rapport au bloc de référence; et
- estimation (EST $\theta$, $\varphi$) d'au moins une position angulaire de la source captée par ledit microphone d'appoint dans un référentiel du microphone principal par calcul d'un rapport entre un premier produit scalaire d'une première composante du bloc du signal audio principal associé à l'instant d'acquisition prédéterminé et d'un bloc du signal audio d'appoint décalé temporellement du retard ($\tau$) estimé et un deuxième produit scalaire d'une deuxième composante dudit bloc du signal audio principal et du bloc correspondant du signal audio décalé temporellement du retard ($\tau$) estimé.

15. Procédé de mixage d'au moins un signal audio d'appoint et d'un signal audio principal représentatifs d'une même scène sonore composée d'une pluralité de sources acoustiques, le signal audio d'appoint étant capté par un dispositif de prise de son situé à proximité d'une source et le signal audio principal étant capté par un dispositif de prise de son ambisonique apte à capter la pluralité de sources, **caractérisé en ce qu'**il comprend les étapes suivantes :

- obtention (M11, M12) de paramètres de mixages du signal audio d'appoint et du signal audio principal, lesdits paramètres étant estimés par le procédé de traitement selon l'une des **1** à **13**, comprenant au moins un retard et au moins une positions angulaire ;
- traitement (M21, M22) du signal d'appoint au moins à partir du retard estimé ;
- encodage spatial (M41, M42) du signal audio d'appoint retardé à partir de ladite au moins une position angulaire estimée; et
- sommation (M5) des composantes dudit au moins un signal ambisonique d'appoint au signal ambisonique principal en un signal ambisonique global.

16. Dispositif (200) de mixage d'au moins un signal audio d'appoint et d'un signal audio principal représentatifs d'une même scène sonore composée d'une pluralité de sources acoustiques, le signal audio d'appoint étant capté par un dispositif de prise de son situé à proximité d'une source et le signal audio principal étant capté par un dispositif de prise de son ambisonique apte à capter la pluralité de sources, ledit signal audio principal étant encodé dans un format dit « ambisonique », comprenant au moins une composante (W) omnidirectionnelle et trois composantes (X, Y, Z) bidirectionnelles projetées selon des axes orthogonaux d'un référentiel du microphone principal, **caractérisé en ce qu'**il comprend les unités suivantes :

obtention (GET) de paramètres de mixages du signal audio d'appoint et du signal audio principal, lesdits paramètres étant estimés par le procédé de traitement selon l'une des 1 à 12, comprenant au moins un retard et au moins une position angulaire ;

- traitement (PROC SA1, PROC SA2) du signal d'appoint au moins à partir du retard estimé ;
- encodage spatial (ENC SA1, ENC SA2) du signal audio d'appoint retardé à partir de ladite au moins une position angulaire estimée ; et
- sommation (MIX) des composantes dudit au moins un signal ambisonique d'appoint au signal ambisonique principal en un signal ambisonique global.

**17.** Terminal d'utilisateur (TU, TU'), **caractérisé en ce qu'**il comprend un dispositif (200) de mixage selon la revendication **16** et au moins un dispositif (100) de traitement de données pour l'estimation de paramètres de mixage selon la revendication **14**.

**18.** Programme d'ordinateur (Pg1) comprenant des instructions pour la mise en oeuvre du procédé de traitement selon l'une des revendications **1** à **13**, lorsqu'il est exécuté par un processeur.

**19.** Programme d'ordinateur (Pg2) comprenant des instructions pour la mise en oeuvre du procédé de mixage selon la revendication **15**, lorsqu'il est exécuté par un processeur.

FIG. 1A

FIG. 1B

FIG. 2

FIG. 3

FIG. 4

FIG. 5

FIG. 6

Normalized Cross-Correlation of 3 different blocks

FIG. 7A

Sum of Cross-Correlations

FIG. 7B

FIG. 8

FIG. 9

FIG. 10

Europäisches
Patentamt

European
Patent Office

Office européen
des brevets

**RAPPORT DE RECHERCHE EUROPEENNE**

Numéro de la demande

EP 16 16 3473

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2014/204999 A2 (DOLBY LAB LICENSING CORP [US]) 24 décembre 2014 (2014-12-24) * paragraphes [0007], [0037], [0045], [0046] et [0055] * | 1-19 | INV. G06F17/15 G10L19/008 H04R29/00 H04S3/00 H04S5/00 H04S7/00 |
| A | JÖRN NETTINGSMEIER: "Field Report: A pop production in Ambisonics", PROCEEDINGS OF THE LINUX AUDIO CONFERENCE 2010, mai 2010 (2010-05), pages 1-7, XP055253324, Utrecht, The Netherlands * le document en entier * | 1-19 | |
| A | MATTHIAS FRANK ET AL: "Producing 3D Audio in Ambisonics", AES 57TH INTERNATIONAL CONFERENCE, 6 mars 2015 (2015-03-06), pages 1-8, XP055253306, Hollywood, USA * section 3.1 * | 1-19 | |
| A | CHRIS BAUME ET AL: "SCALING NEW HEIGHTS IN BROADCASTING USING AMBISONICS", PROC. OF THE 2ND INTERNATIONAL SYMPOSIUM ON AMBISONICS AND SPHERICAL ACOUSTICS, 6 mai 2010 (2010-05-06), pages 1-9, XP055253314, Paris, France * section 3.3 * | 1-19 | DOMAINES TECHNIQUES RECHERCHES (IPC) G06F G10L H04R H04S |
| A | KEARNEY GAVIN ET AL: "Virtual Vs. Actual Multichannel Acoustical Recording", AES CONVENTION 124; MAY 2008, AES, 60 EAST 42ND STREET, ROOM 2520 NEW YORK 10165-2520, USA, mai 2008 (2008-05), XP040508542, * section 5.2 * | 1-19 | |

-/--

Le présent rapport a été établi pour toutes les revendications

| Lieu de la recherche | Date d'achèvement de la recherche | Examinateur |
|---|---|---|
| Berlin | 29 juillet 2016 | Huguet Serra, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

36

Europäisches
Patentamt

European
Patent Office

Office européen
des brevets

## RAPPORT DE RECHERCHE EUROPEENNE

Numéro de la demande

EP 16 16 3473

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2012/105885 A1 (ERICSSON TELEFON AB L M [SE]; BRIAND MANUEL [SE]; JANSSON TOMAS [SE]) 9 août 2012 (2012-08-09) * le document en entier * ----- | 1-19 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Berlin | 29 juillet 2016 | Huguet Serra, G |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 16 3473

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-07-2016

| Document brevet cité au rapport de recherche | | | Date de publication | Membre(s) de la famille de brevet(s) | | | Date de publication |
|---|---|---|---|---|---|---|---|
| WO 2014204999 | A2 | | 24-12-2014 | CN | 104244164 | A | 24-12-2014 |
| | | | | CN | 105340299 | A | 17-02-2016 |
| | | | | EP | 3011763 | A2 | 27-04-2016 |
| | | | | US | 2016142851 | A1 | 19-05-2016 |
| | | | | WO | 2014204999 | A2 | 24-12-2014 |
| WO 2012105885 | A1 | | 09-08-2012 | CN | 103403800 | A | 20-11-2013 |
| | | | | EP | 2671222 | A1 | 11-12-2013 |
| | | | | EP | 3035330 | A1 | 22-06-2016 |
| | | | | US | 2013301835 | A1 | 14-11-2013 |
| | | | | US | 2016198279 | A1 | 07-07-2016 |
| | | | | WO | 2012105885 | A1 | 09-08-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. A. GERZON.** Periphony: With-Height Sound Reproduction. *J. Audio Eng. Soc.,* Février 1973, vol. 21 (1), 2-10
- **D. VENTZAS ; N. PETRELLIS.** PEAK SEARCHING ALGORITHMS and APPLICATIONS. *SIPA,* 2011
- A Digital Signal Processing Approach to Interpolation. *Proceedings IEEE,* Juin 1973, vol. 61 (6), 692-702
- **J. DANIEL ; S. MOREAU.** Further Study of Sound Field Coding with Higher Order Ambisonics. *proceedings de la conférence AES 116th Convention,* 2004